# EUROPÄISCHE PATENTSCHRIFT

(11) **EP 0 697 443 B1**
(45) Veröffentlichungstag und Bekanntmachung des Hinweises auf die Patenterteilung: **04.04.2001**
(21) Anmeldenummer: 95112196.1
(22) Anmeldetag: 03.08.1995
(51) Int. Cl.: C09B 62/503, C09B 62/04, C09B 62/44

(54) **Triphendioxazin-Reaktivfarbstoffe**
Triphendioxazine reactive dyes
Colorants triphéndioxazines réactifs

(30) Priorität: 16.08.1994 DE 4428906
(43) Veröffentlichungstag der Anmeldung: 21.02.1996
(73) Patentinhaber: DyStar Textilfarben GmbH & Co. Deutschland KG, 60318 Frankfurt am Main (DE)
(72) Erfinder: Schumacher, Christian Dr., D-65779 Kelkheim (DE)

(56) Entgegenhaltungen:
- EP-A- 0 373 534
- EP-A- 0 385 120
- EP-A- 0 474 596
- EP-A- 0 501 252
- EP-A- 0 568 860
- EP-A- 0 681 005
- WO-A-90/13604

## Beschreibung

Die Erfindung liegt auf dem technischen Gebiet der faserreaktiven Farbstoffe.

Triphendioxazinfarbstoffe mit einem durch drei Aminogruppen substituierten s-Triazinylring, enthaltend mindestens eine faserreaktive Gruppe des Typs Vinylsulfon, sind aus EP-A-0 325 246 und 0 385 120 bekannt. Weiterhin sind aus der EP-A-474 596, der nicht vorveröffentlichten EP-A-0 681 005 und der WO-A-90/13604 ähnliche Triphendioxazinfarbstoffe mit einem amino-, halogen- bzw. cyanoamino-substituierten Triazinrest, der eine faserreaktive Gruppe aus der Vinylsulfon-Reihe enthält, bekannt.

Mit der vorliegenden Erfindung werden neue Triphendioxazinfarbstoffe der allgemeinen Formel (1) beschrieben, 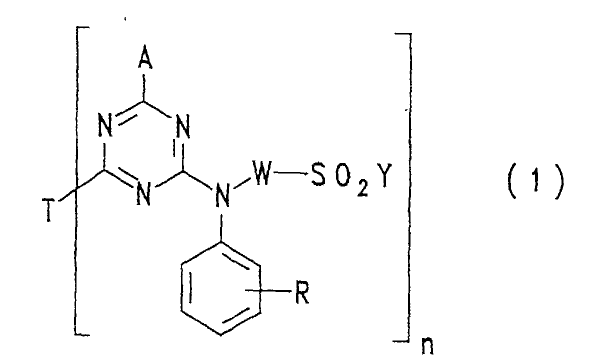 worin bedeuten:
- n: steht für 1 oder 2;
- A: steht für eine Gruppe der Formeln (3a), (3b), (3d) oder (3f) bis (3i) 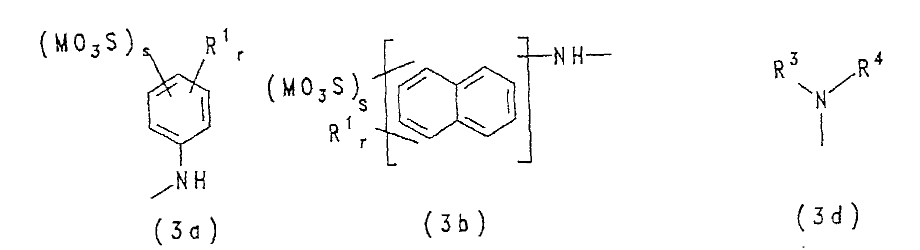 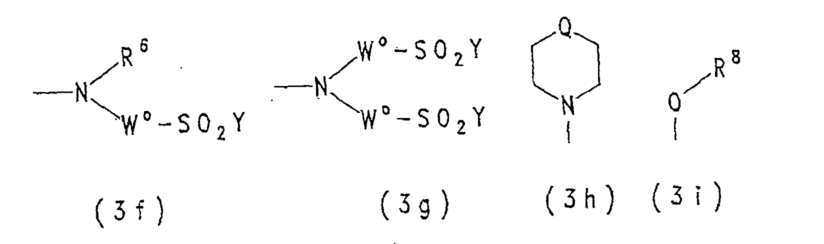 worin bedeuten:
R¹ ist C₁-C₄-Alkyl, C₁-C₄-Alkoxy, Sulfo, -SO₂Y oder Carboxy;
R³ und R⁴ sind unabhängig voneinander Wasserstoff oder C₁-C₆-Alkyl, vorzugsweise C₁-C₃-Alkyl, das mit einem oder mehreren, vorzugsweise 1 bis 3, Substituenten aus der Reihe Hydroxy, Sulfo, Sulfato, Amino, C₁-C₄-Alkylamino, Di-(C₁-C₄)-alkylamino, Cyano, C₁-C₄-Alkylcarbonyl, C₁-C₄-Alkoxycarbonyl, Aminocarbonyl oder Carboxy substituiert sein kann, bevorzugt aber Wasserstoff oder durch Hydroxy, Sulfo oder Sulfato substituiertes C₁-C₃-Alkyl, oder
R³ und R⁴ bilden zusammen mit dem N-Atom einen gesättigten fünf- bis siebengliedrigen Heterocyclus, der 1 bis 3 weitere Heteroatome aus der Gruppe N, 0 und S im Ring enthalten kann;
R⁶ ist Wasserstoff, C₁-C₄-Alkyl oder unsubstituiertes Phenyl oder durch Sulfo, Halogen, C₁-C₄-Alkyl, C₁-C₄-Alkoxy, Carboxy, Cyano oder Nitro substituiertes Phenyl, bevorzugt Phenyl, 3-Sulfophenyl oder 4-Sulfophenyl;
R⁸ ist C₁-C₆-Alkyl oder Phenyl, das durch 1 bis 2 gleiche oder verschiedene Substituenten aus der Reihe C₁-C₄-Alkoxy, Sulfo, Amino, Carboxy, Hydroxy, C₁-C₄-Alkyl oder Halogen substituiert sein kann;
W° ist C₂-C₆-Alkylen, vorzugsweise Propylen oder Ethylen;
Q ist Sauerstoff, Schwefel, ein Rest -SO₂-, eine direkte Bindung, eine Methylengruppe oder ein Rest -NR⁷-, worin R⁷ eine der Bedeutungen von R³ hat, insbesondere R⁷ Hydroxyethyl oder Sulfatoethyl ist;
m ist 0 oder 1;
r ist 0, 1 oder 2, vorzugsweise 0;
s ist 0, 1, 2 oder 3, vorzugsweise 1 oder 2;
- R: ist Wasserstoff, Sulfo, Halogen, C₁-C₄-Alkyl, C₁-C₄-Alkoxy, Carboxy, Cyano oder Nitro;
- W: ist C₂-C₆-Alkyien;
- Y: ist Vinyl oder ist -(CH₂)₂-V, wobei V für einen unter alkalischen Bedingungen eliminierbaren Substituenten steht;
- T: ist der Rest eines Triphendioxazin-Chromophors der Formeln (2a) oder (2b) 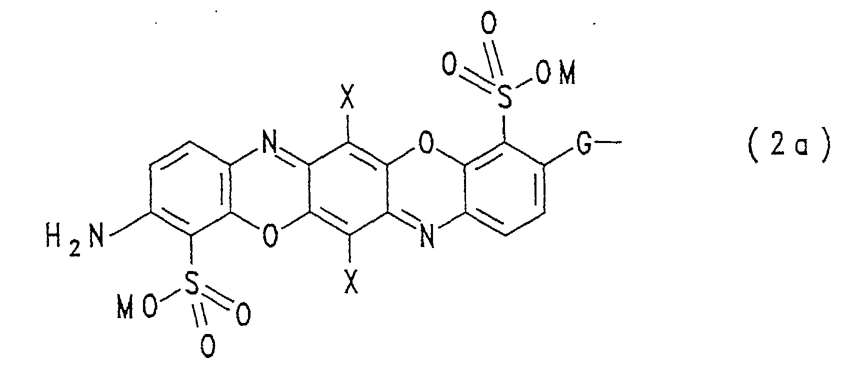 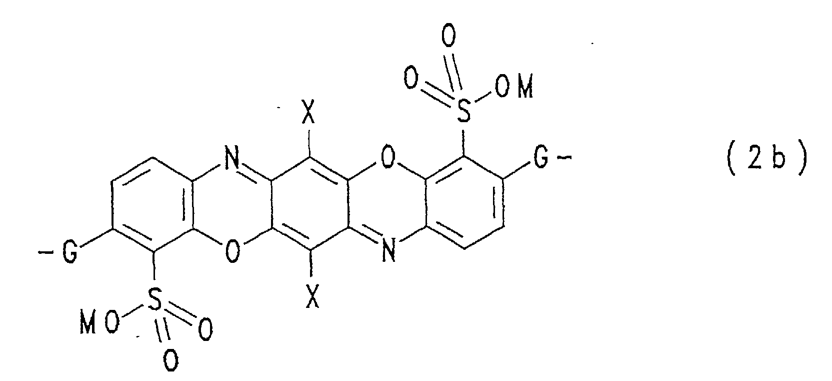 worin
M Wasserstoff, Ammonium oder ein Alkalimetall ist,
X für Halogen, Wasserstoff, C₁-C₄-Alkyl oder C₁-C₄-Alkoxy steht und
G eine -NH-Gruppe oder einen Rest der Formel -NH-B-NH- ist, worin B C₂-C₆-Alkylen bedeutet.

Bevorzugte Triphendioxazin-Chromophore der Formel (2a) sind 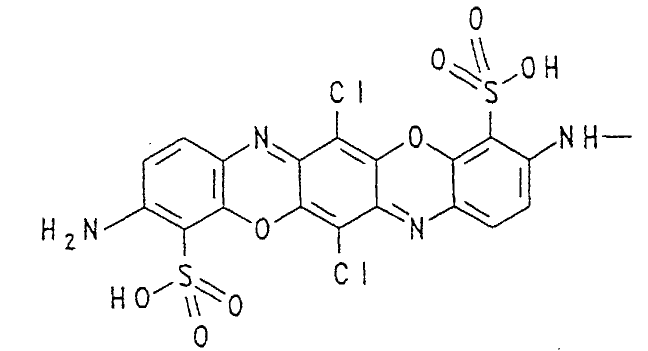 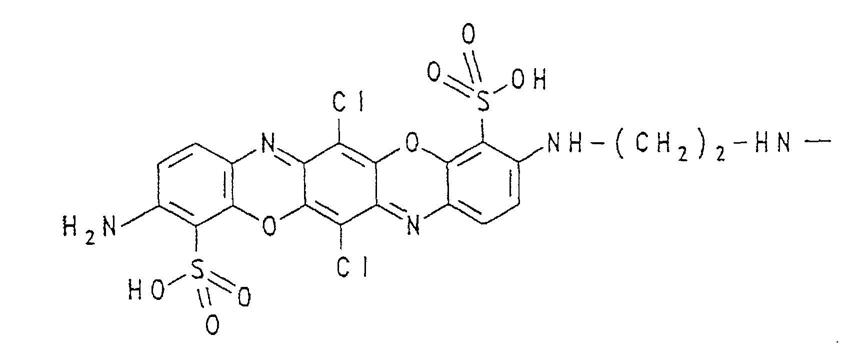 und

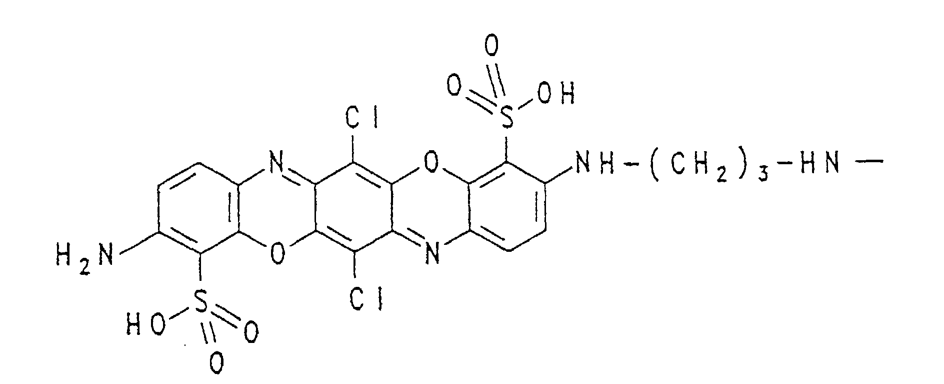

Bevorzugte Triphendioxazin-Chromophore der Formel (2b) sind 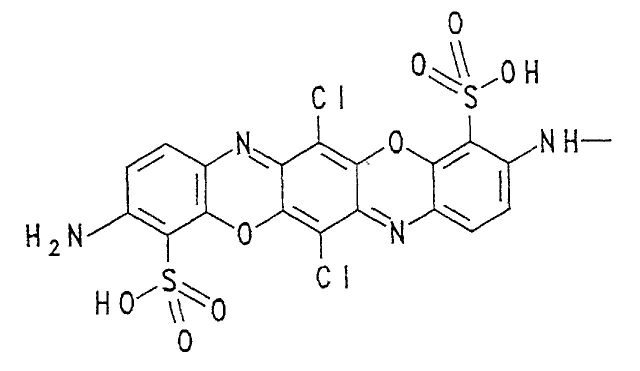 und 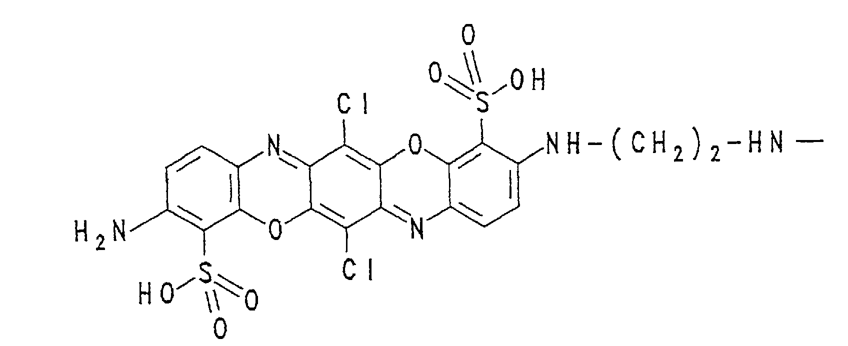 und

Von besonderem Interesse sind Verbindungen der Formel (1), worin A für einen Morpholino-, Pyrrolidino-, Piperidino- oder Piperazino-Rest steht, wobei der Piperazino-Rest mit eienr Hydroxyethyl- oder Sulfatoethyl-Gruppe substituiert sein kann.

In der Gruppe der Formel (3g) bedeutet W° vorzugsweise C₂-C₃-Alkylen. In der Gruppe der Formel (3h) bedeutet W° vorzugsweise C₂-C₃-Alkylen und R⁶ hat vorzugsweise eine von Wasserstoff verschiedene Bedeutung.

Beispiele für A sind Metnoxy, Ethoxy, Phenoxy, 4-Sulfophenoxy, 2-Carboxyphenoxy, 4-Carboxyphenoxy, Amino, 2,5-Disulfophenylamino-, 3-Sulfophenyl-amino, 4-Sulfophenyl-amino, 2-Sulfophenyl-amino-, 4-Methyl-3-sulfophenyl-amino, 4-Methyl-2-sulfophenyl-amino, 4-Methoxy-3-sulfophenyl-amino, 4-Methyl-2,5-disulfophenyl-amino, 4-Methoxy-2,5-disulfophenyl-amino, 4-Ethyl-2,5-disulfophenyl-amino, 4-Ethoxy-2,5-disulfophenyl-amino, 4,8-Disulfo-naphth-2-yl-amino, 5,7-Disulfo-naphth-2-yl-amino, 3,6,8-Trisulfo-naphth-2-yl-amino, 4,6,8-Trisulfo-naphth-2-yl-amino, Methylamino, Ethylamino, Dimethylamino, Diethylamino, 3-Hydroxypropylamino, 2-Hydroxyethylamino, N-Ethyl-(2-hydroxyethyl)-amino, 2-Sulfatoethyl-amino, N-Methyl-2-sulfatoethylamino, Bis-(2-hydroxyethyl)amino, Bis-(2-sulfatoethyl)-amino, 2-Sulfoethylamino, N-Methyl-2-sulfoethylamino, Sulfomethylamino, N-Methyl-sulfomethyl-amino, 2-Carboxyethyl-amino, Carboxymethyl-amino, N-Methyl-2,3,4,5,6-pentahydroxy-hexyl-amino, 2,3,4,5,6-Pentahydroxy-hexyl-amino, Morpholino, Pyrrolidino, Piperidino, Thiomorpholino, Thiomorpholinodioxid, Piperazino, 2'-Sulfatoethyl-piperazino, 2'-Hydroxyethyl-piperazino, N-Phenyl-N-3-(β-sulfatoethylsulfonyl-)propylamino, N-Phenyl-N-3-(β-chlorethylsulfonyl)-propylamino, N-Phenyl-N-3-(vinylsulfonyl-)propylamino, N-Phenyl-N-2-(β-Sulfatoethylsulfonyl-)ethylamino, N-3'-Sulfophenyl-N-3-(β-sulfatoethylsulfonyl)propylamino, N-3'-Sulfophenyl-N-2-(β-sulfatoethylsulfonyl)-ethylamino, N-3'-Sulfophenyl-N-3-(vinylsulfonyl-)propylamino, N-4'-Sulfophenyl-N-3-(β-sulfatoethylsulfonyl-)propylamino, N-4'-Sulfophenyl-N-2-(β-Sulfatoethylsulfonyl-)ethylamino, N-3-(β-Sulfatoethylsulfonyl-)propylamino, N,N-Bis-(β-Chlorethylsulfonyl-ethyl)-amino, 4-(β-Sulfatoethylsulfonyl)-phenylamino-, 3-(β-Sulfatoethylsulfonyl-)phenylamino-, 6-(β-Sulfatoethylsulfonyl)-naphth-2-yl-amino, 1-Sulfo-6-(β-Sulfatoethylsulfonyl)-naphth-2-yl-amino, 8-(β-Sulfatoethylsulfonyl)-naphth-2-yl-amino und 6-Sulfo-8-(β-Sulfatoethylsulfonyl)-naphth-2-yl-amino.

Von besonderem Interesse sind ferner Verbindungen der Formel (1), worin bedeuten:
- R: Wasserstoff oder Sulfo;
- W: Ethylen oder Propylen;
- Y: Vinyl, β-Sulfatoethyl, β-Thiosulfatoethyl, β-Phosphatoethyl oder β-Halogenoethyl, wobei Halogen Chlor oder Brom ist, insbesondere β-Sulfatoethyl, β-Chlorethyl und Vinyl;
- M: Wasserstoff, Lithium, Natrium oder Kalium;
- X: Chlor, Brom, Wasserstoff, Methyl, Ethyl, Methoxy oder Ethoxy;
- G: eine Gruppe der Formeln -NH-, -NH-CH₂CH₂-NH- oder -NH-(CH₂)₃-NH-.

Besonders bevorzugt sind die nachfolgend aufgeführten Farbstoffe der Formeln (1B) bis (1H), (1L) bis (1P), (1R), (1V), (1X) und (1YI), in welchen G¹ -HN- oder -NH-(CH₂)ₓ-NH- mit x gleich der Zahl 2 oder 3 bedeutet; 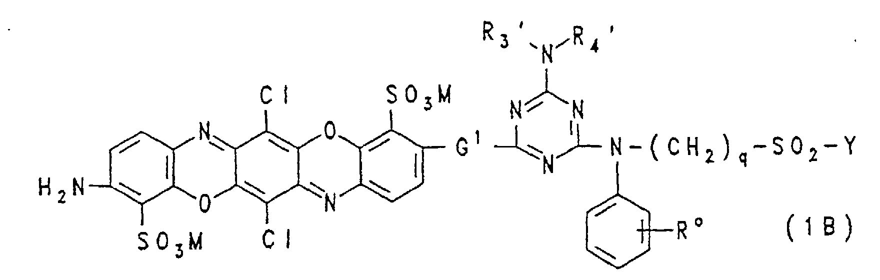 worin R₃' und R₄' unabhängig voneinander CH₃, CH₂CH₂OH, CH₂COOM, CH₂SO₃M, CH₂CH₂SO₃M, CH₂CH₂COOM, CH₂CH₂OSO₃M oder Wasserstoff bedeuten; 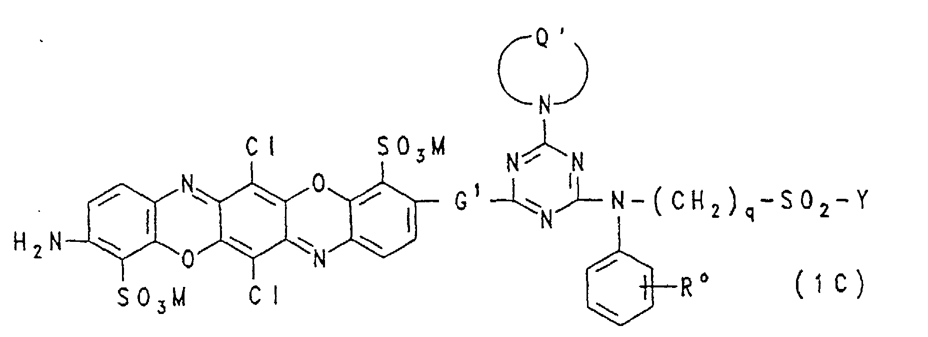 worin Q' 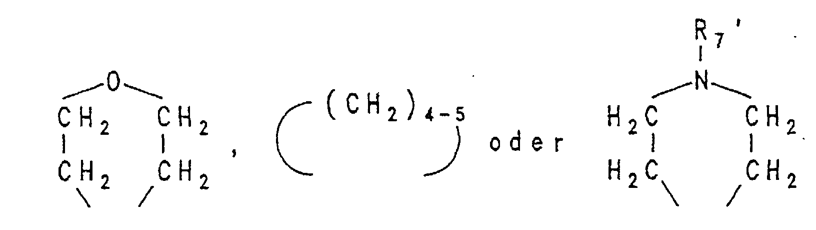 ist, worin R₇' H, CH₂CH₂OH oder CH₂CH₂OSO₃H bedeuten; 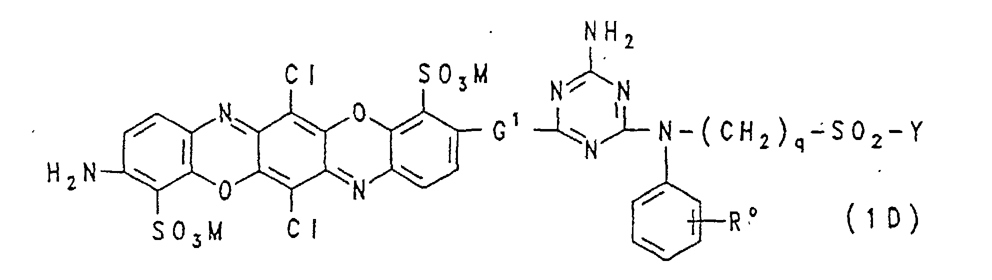 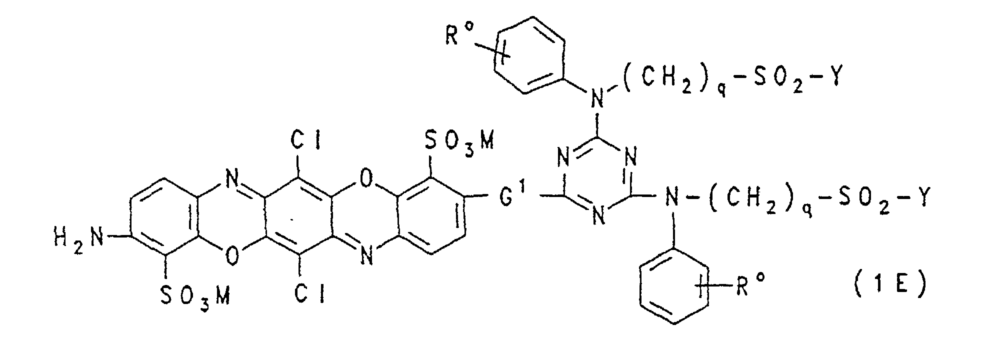 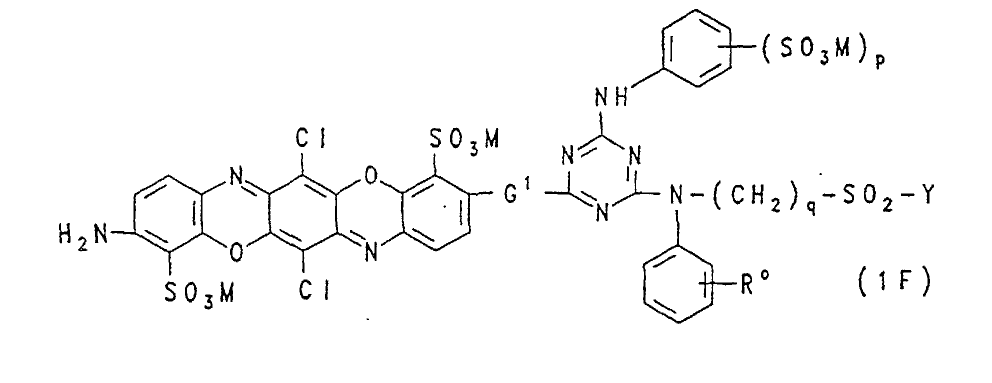 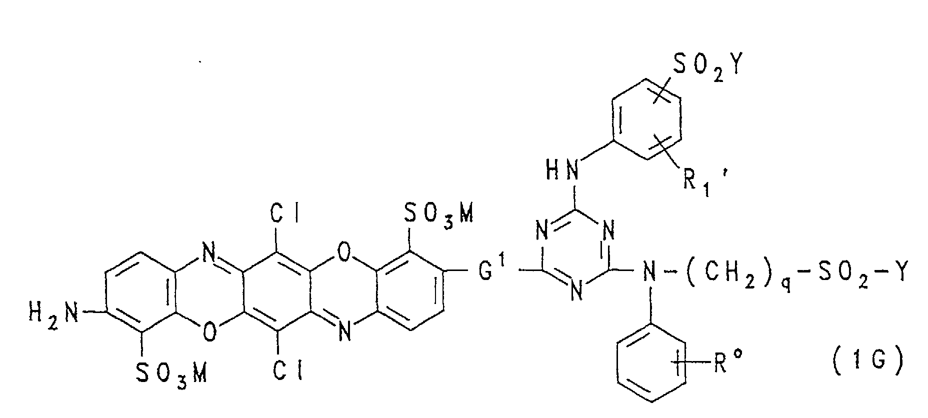 worin R₁' H, SO₃H, CH₃, OCH₃ oder COOH bedeutet; 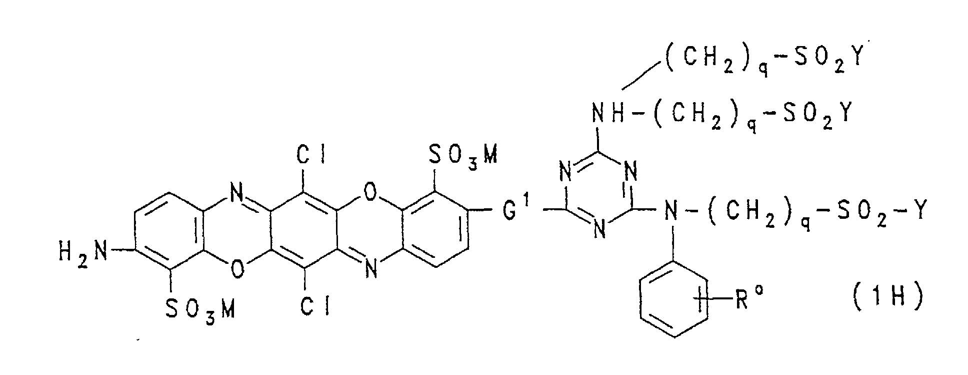 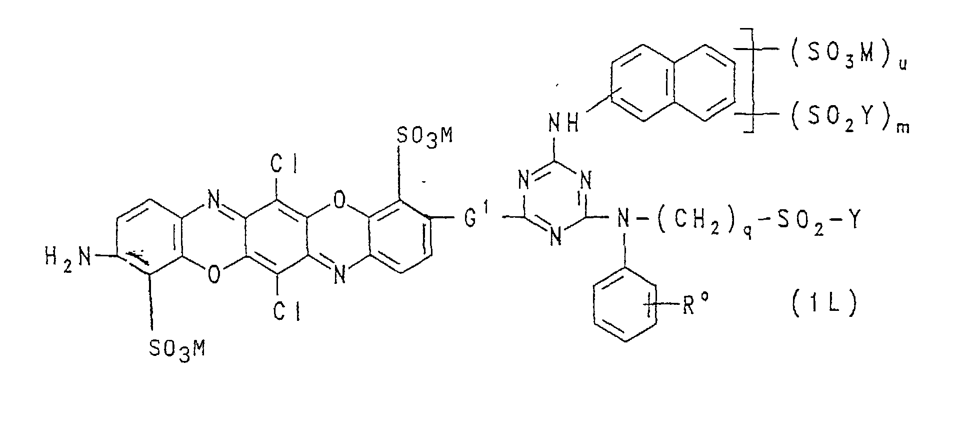 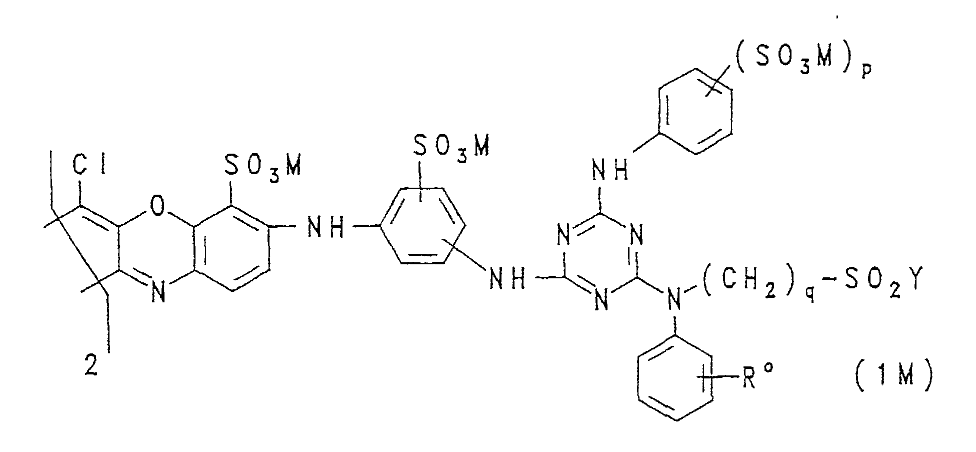 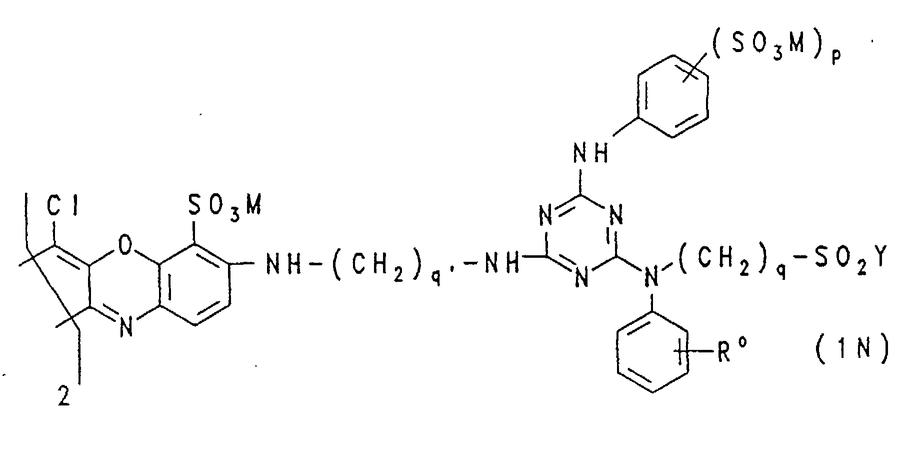 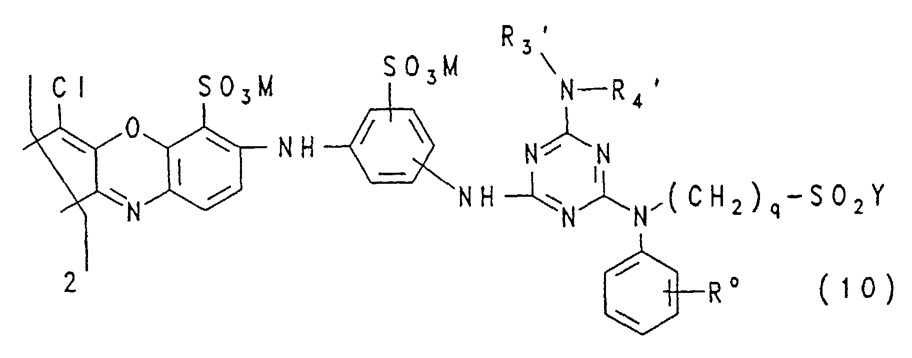 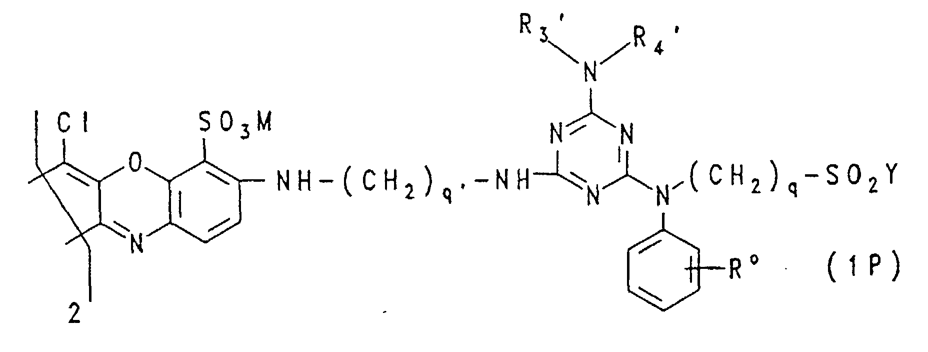 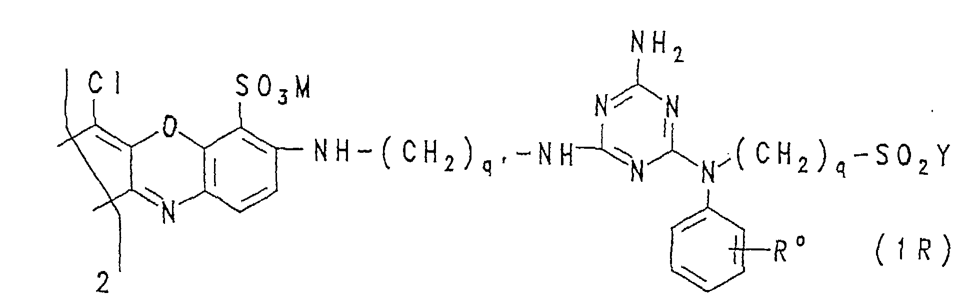 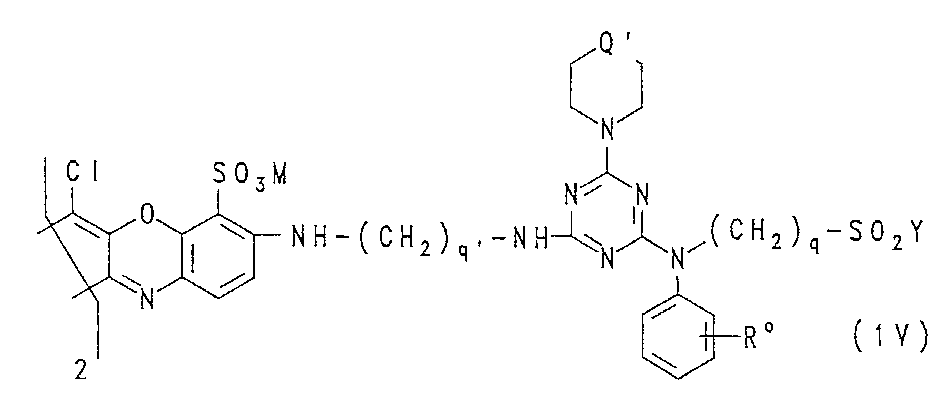 worin Q' die in (1E) genannte Bedeutung für Q' hat; 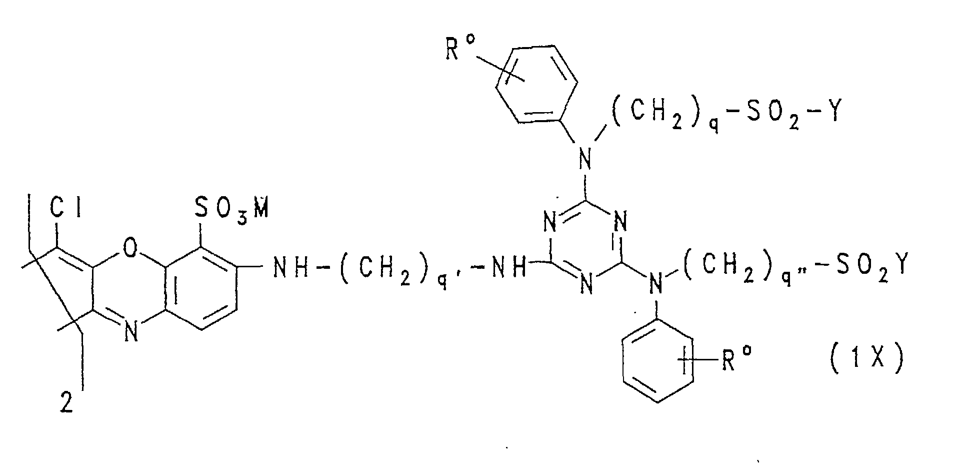 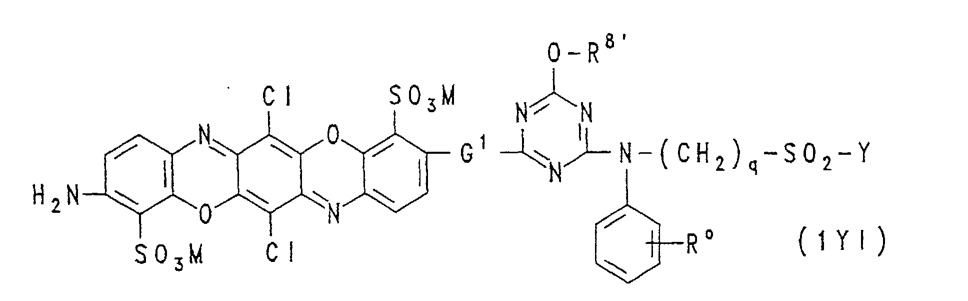 worin R^{8'} Methyl oder Ethyl bedeutet; 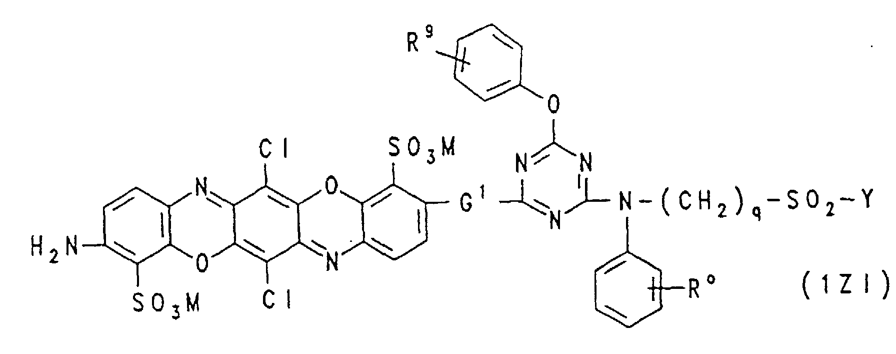 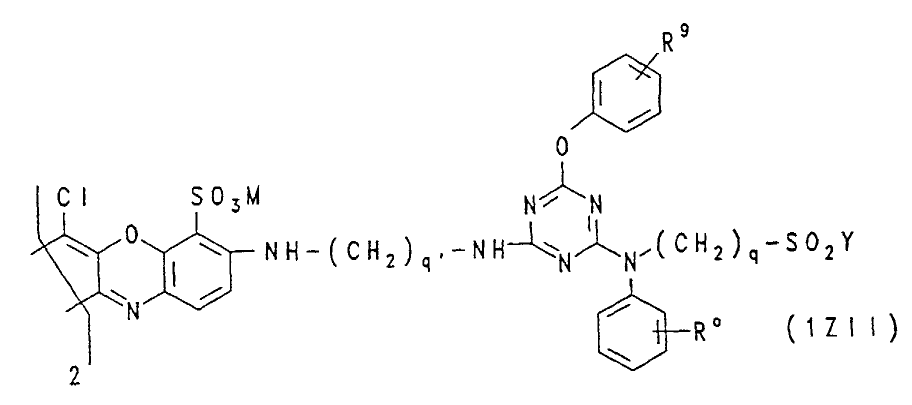 worin R⁹ Wasserstoff, Hydroxy, Carboxy oder Sulfo ist und
in welchen M, m und Y die obengenannten, insbesondere bevorzugten Bedeutungen haben, R^{o} gleich Wasserstoff oder Sulfo ist; q, q' und q'' die Zahl 2 oder 3; p die Zahl 1 oder 2 und u die Zahl 1, 2 oder 3 sind.

In den allgemeinen Formeln (1), (2) und (3) sowie in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel -SO₃M, Carboxygruppen Gruppen entsprechend der allgemeinen Formel -COOM, Phosphatogruppen Gruppen entsprechend der allgemeinen Formel -OPO₃M₂, Thiosulfatogruppen Gruppen entsprechend der allgemeinen Formel -S-SO₃M und Sulfatogruppen Gruppen entsprechend der allgemeinen Formel -OSO₃M, in welchen M die obengenannte Bedeutung hat.

Die vorliegende Erfindung betrifft weiterhin ein Verfahren zur Herstellung der erfindungsgemäßen Triphendioxazin-Verbindungen der allgemeinen Formel (1), das dadurch gekennzeichnet ist, daß man eine aminogruppenhaltige Dichlortriazinylamino-triphendioxazin-Verbindung der allgemeinen Formel (4) 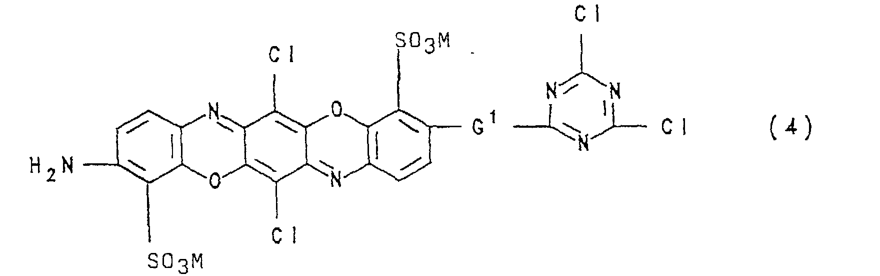 mit M der obengenannten Bedeutung in wäßrigem oder wäßrig-organischem Medium bei einem pH-Wert zwischen 3 und 9, bevorzugt zwischen 4 und 7, und bei einer Temperatur zwischen 25 und 100°C, bevorzugt zwischen 40 und 80°C, mit einer Aminoverbindung der allgemeinen Formel (5) 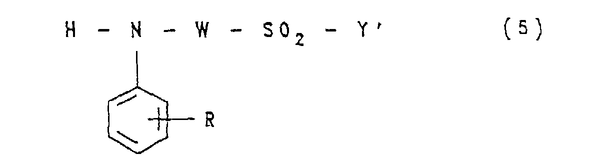 und einer Aminoverbindung der Formel HA, in welchen A, R und W die obengenannten Bedeutungen haben und Y' für Hydroxyethyl oder für eine der obengenannten Bedeutungen für Y steht, in beliebiger Reihenfolge umsetzt und im Falle von Y' gleich Hydroxyethyl die Hydroxyethylgruppe anschließend mit Schwefelsäure, Oleum oder Chlorsulfonsäure zur Sulfatoethyl gruppe umsetzt.

Führt man die Umsetzung in einem wäßrig-organischen Medium durch, so ist das organische Medium ein gegenüber den Reaktanten inertes, dipolar aprotisches Lösemittel, das in Wasser löslich oder mit Wasser mischbar ist, wie beispielsweise Aceton, Dimethylformamid, Dimethylacetamid, Sulfolan oder N-Methyl-pyrrolidon. Vorteilhaft wird bei der Kondensation freiwerdende Salzsäure laufend durch Zugabe wäßriger Alkali- oder Erdalkalihydroxide, -carbonate oder -bicarbonate neutralisiert.

Triphendioxazinfarbstoffe der Formel (1) mit Y gleich Sulfatoethyl werden zweckmäßigerweise, wie vorstehend beschrieben, über die Hydroxyethylsulfon-Verbindung mit anschließender Veresterung zur Sulfatoethylsulfon-Verbindung hergestellt.

Die Herstellung der Ausgangsverbindung der allgemeinen Formel (4) ist an und für sich bekannt (vgl. europäische Patentanmeldungs-Veröffentlichung Nr. 0 448 815, Beispiel 1, europäische Patentanmeldungs-Veröffentlichung Nr. 0 142 777, Beispiel 44, und deutsche Auslegeschrift Nr. 2 124 080, Beispiel 1). So kann die Umsetzung zwischen der Diamino-triphendioxazin-Verbindung und dem Cyanurchlorid bei einem pH-Wert zwischen etwa 4 und 7 und einer Temperatur zwischen etwa 0 und 25°C erfolgen.

Die Ausgangsverbindungen der allgemeinen Formel (5) lassen sich beispielsweise in der Weise herstellen, daß man N-Allyl-N-acetyl-anilin (s. J. Org. Chem. 14, 1099 (1949)) analog der in der deutschen Offenlegungsschrift Nr. 41 06 106 beschriebenen Verfahrensweise mit 2-Mercapto-ethanol in Gegenwart eines Radikalinitiators umsetzt, die erhaltene N-[γ-(β'-Hydroxyethylthio)-propyl]-N-acetyl-anilin-Verbindung zur Sulfonylverbindung oxidiert, beispielsweise mittels Wasserstoffperoxid in Gegenwart einer katalytischen Menge einer Übergangsmetallverbindung, wie beispielsweise Wolframoxid. Aus der so erhaltenen Sulfonylverbindung wird die Acetylgruppe im alkalischen oder sauren Bereich, vorzugsweise in salzsaurer wäßriger Lösung, wie beispielsweise in 5 bis 30 %iger wäßriger Salzsäure, bei einer Temperatur zwischen 80 und 100°C hydrolytisch abgespalten. Das so erhaltene N-Phenyl-N-[γ-(β'-hydroxyethylsulfonyl)-propyl]-amin kann aus der neutral gestellten wäßrigen Syntheselösung von der wäßrigen Phase abgetrennt werden. Dessen β-Hydroxyethylsulfonyl-Gruppe läßt sich nach üblichen Methoden verestern, so beispielsweise mittels konzentrierter Schwefelsäure bei einer Temperatur zwischen 10 und 30°C in die β-Sulfatoethylsulfonyl-Verbindung oder mit Thionylchlorid oder gasförmigem Chlorwasserstoff in die β-Chlorethylsulfonyl-Verbindung überführen.

Ausgangsverbindungen der allgemeinen Formel (5) sind beispielsweise N-Phenyl-N-[γ(β'-chlorethylsulfonyl)-propyl]-amin, N-(4-Chlorphenyl)-N-[γ-(β'-chlorethylsulfonyl)-propyl]-amin, N-(2-Methylphenyl)-N-[γ-(β'-chlorethylsulfonyl)-propyl]-amin, N-(4-Methoxyphenyl)-N-[γ-(β'-chlorethylsulfonyl)-propyl]-amin, N-(3-Sulfophenyl)-N-[γ-(β'-chlorethylsulfonyl)-propyl]-amin, N-(4-Sulfophenyl)-N-[γ-(β'-chlorethylsulfonyl)-propyl]-amin, N-Phenyl-N-(*γ*-vinylsulfonyl-propyl)-amin, N-(4-Chlorphenyl)-N-(γ-vinylsulfonyl-propyl)-amin, N-(2-Methylphenyl)-N-(γ-vinylsulfonyl-propyl)-amin, N-(4-Methoxyphenyl)-N-(*γ*-vinylsulfonyl-propyl)-amin, N-(3-Sulfophenyl)-N-(γ-vinylsulfonyl-propyl)-amin, N-(4-Sulfophenyl)-N-(γ-vinylsulfonyl-propyl)-amin, N-Phenyl-N-(γ-(β'-sulfatoethylsulfonyl)-propyl]-amin, N-(4-Chlorphenyl)-N-[γ-(β'-sulfatoethylsulfonyl)-propyl]-amin, N-(2-Methylphenyl)-N-[γ-(β'-sulfatoethylsulfonyl)-propyl]-amin, N-(4-Methoxyphenyl)-N-[γ-(β'-sulfatoethylsulfonyl)-propyl]-amin, N-(3-Sulfophenyl)-N-[γ-(β'-sulfatoethylsulfonyl)-propyl]-amin, N-(4-Sulfophenyl)-N-[γ-(β'-sulfatoethylsulfonyl)-propyl]-amin, N-Phenyl-N-[β-methyl-γ-(β'-chlorethylsulfonyl)-propyl]-amin, N-Phenyl-N-[β-ethyl-γ-(β'-chlorethylsulfonyl)-propyl]-amin, N-Phenyl-N-[δ-(β'-chlorethylsulfonyl)-butyl]-amin, N-Phenyl-N-[ε-(β'-chlorethylsulfonyl)-pentyl]-amin und N-Phenyl-N-[β-(β'-chlorethylsulfonyl)-hexyl]-amin, bevorzugt hiervon insbesondere N-Phenyl-[γ-(β'-chlorethylsulfonyl)-propyl]-amin und N-Phenyl-(γ-(β'-sulfatoethylsulfonyl)-propyl]-amin.

Die Abscheidung der erfindungsgemäß hergestellten Verbindungen der allgemeinen Formel (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann.

Die Verbindungen der allgemeinen Formel (1) eignen sich zum Färben und Bedrucken der verschiedensten Materialien, wie Seide, Leder, Wolle, Polyamidfasern und Polyurethane, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff, regenerierte oder auch durch kationische oder anionenaffine Gruppen modifizierte Cellulose. Die Farbstoffe (1) sind auch zum Färben oder Bedrucken von hydroxygruppenhaltigen Fasern geeignet, die in Mischgeweben enthalten sind, zum Beispiel von Gemischen aus Baumwolle mit Polyesterfasern oder Polyamidfasern.

Die Farbstoffe (1) lassen sich auf verschiedene Weise auf das Fasermaterial applizieren und auf der Faser fixieren, insbesondere in Form von wäßrigen Farbstofflösungen und -druckpasten. Sie eignen sich sowohl für die allgemein bekannten Ausziehverfahren in weiten Temperaturbereichen, insbesondere bei 60 bis 80°C, als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Bevorzugt werden die Farbstoffe (1) in die Ausziehverfahren eingesetzt. Hierbei erhält man auch dann hochwertige Färbungen, wenn das Färbebad nur eine geringe Menge (weniger als 50 g/l) an einem oder mehreren Elektrolytsalzen, wie Natriumchlorid, Kaliumchlorid und Natriumsulfat, beispielsweise 20 bis 40 g/l Färbeflotte, im Gegensatz zu den in der Technik allgemein verwendeten Mengen von 50 bis 80 g/l, enthält. Nach dem Fixieren werden die Färbungen oder Drucke mit kaltem und heißem Wasser, gegebenenfalls unter Zusatz eines dispergierend wirkenden und die Diffusion der nicht fixierten Anteile fördernden Mittels, gründlich gespült. Diese Färbe- und Druckverfahren sind zahlreich in der allgemeinen Fachliteratur wie auch in der Patentliteratur, wie beispielsweise in den anfangs genannten Druckschriften, beschrieben.

Gegenstand der vorliegenden Erfindung ist deshalb auch die Verwendung der Farbstoffe (1) zum Färben (einschließlich des Bedrucken) dieser Materialien und Verfahren zum Färben (und Bedrucken) solcher Materialien in an und für sich üblicher Verfahrensweise, bei welchen ein Farbstoff (1) als Farbmittel eingesetzt wird, indem man den Farbstoff (1) im wäßrigen Medium auf das Material appliziert und ihn mittels Wärme oder mittels einer alkalisch wirkenden Verbindung oder mittels beidem auf dem Material fixiert.

Die Farbstoffe (1) zeichnen sich durch hohe Reaktivität, gutes Fixiervermögen und ein sehr gutes Aufbauvermögen aus. Die Fixiergrade sind hoch und nicht fixierte Anteile können leicht ausgewaschen werden, wobei die Differenz zwischen Ausziehgrad und Fixiergrad bemerkenswert klein, d.h. der Seifverlust sehr gering ist. Die Farbstoffe (1) eignen sich auch zum Druck, vor allem auf Baumwolle, ebenso aber auch zum Bedrucken von stickstoffhaltigen Fasern, zum Beispiel von Wolle oder Seide oder von Mischgeweben, die Wolle oder Seide enthalten.

Die mit den Farbstoffen (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

Eine Lösung des Lithiumsalzes von 58,9 Teilen 2,9-Diamino-9,13-dichlor-1,8-disulfo-triphendioxazin in 1500 Teilen Wasser wird bei 15 bis 20°C unter Einhaltung eines pH-Wertes zwischen 6 und 7 mittels einer Lithiumhydroxidlösung mit einer Suspension von 20 Teilen Cyanurchlorid in 200 Teilen Eiswasser versetzt. Man rührt den Ansatz noch kurze Zeit nach und gibt sodann 75 Teile N-Phenyl-N-γ-(β'-sulfatoethylsulfonyl)-propylamin als Lösung in 200 Teilen Wasser hinzu. Man erwärmt den Ansatz 1 Stunde bei 65°C, rührt anschließend noch einige Zeit bei 80°C unter Einhaltung eines pH-Wertes zwischen 4 und 5 nach, bis die Umsetzung beendet ist und isoliert nach Beendigung der Umsetzung die erfindungsgemäße Triphendioxazinverbindung in üblicher Weise, beispielsweise durch Aussalzen mit Natriumchlorid als Alkalimetallsalz (Natriumsalz). Sie besitzt, in Form der freien Säure geschrieben, die Formel 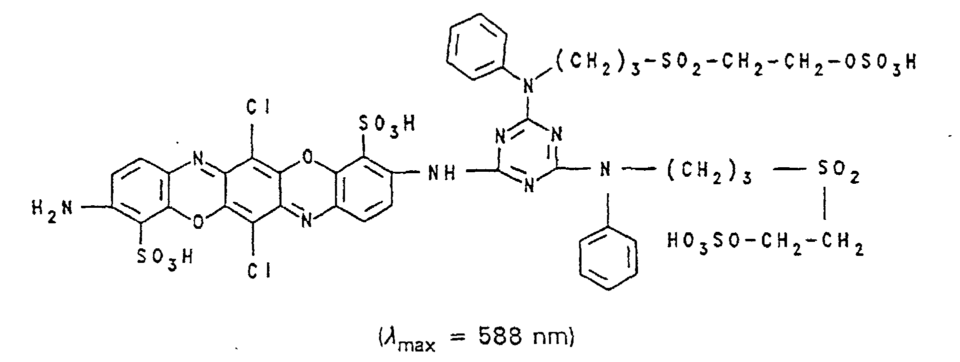 und zeigt sehr gute Farbstoffeigenschaften. Nach den in der Technik für faserreaktive Farbstoffe üblichen Applikations- und Fixierverfahren liefert sie auf den in der Beschreibung genannten Fasermaterialien, insbesondere Cellulosefasermaterialien, wie Baumwolle, sehr farbstarke, brillante, rotstichig blaue Färbungen und Drucke mit hoher Fixierquote.

### Beispiel 2

Die erfindungsgemäße Triphendioxazin-Verbindung des Beispieles 1 läßt sich in ihr Vinylsulfonyl-Derivat überführen, indem man beispielsweise 100 Teile der erfindungsgemäßen Triphendioxazin-Verbindung des Beispieles 1, in 1000 Teilen Wasser gelöst und bei 25°C mit soviel Natronlauge versetzt, bis der Ansatz einen pH-Wert von 12 erlangt hat. Man rührt den Ansatz unter Einhaltung dieses pH-Wertes und der angegebenen Temperatur noch 30 Minuten nach und isoliert sodann die erfindungsgemäße Verbindung der Formel (in Form der freien Säure geschrieben) 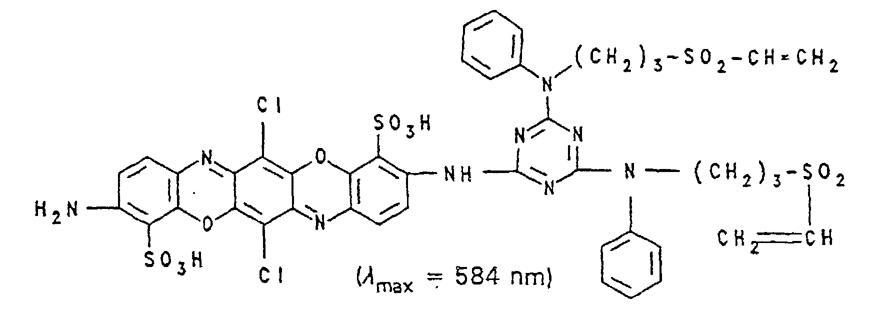 durch Aussalzen mit Natriumchlorid. Sie besitzt ebenfalls sehr gute faserreaktive Farbstoffeigenschaften und liefert, wie die erfindungsgemäße Verbindung des Beispieles 1, beispielsweise auf Cellulosefasern farbstarke, brillante, rotstichig blaue Färbungen und Drucke in hohen Fixierquoten.

### Beispiel 3

54,5 Teile der Verbindung 3,10-Diamino-6,13-dichlor-triphendioxazin-4,11-disulfosäure werden in 1000 Teilen Wasser mit 4,8 Teilen Lithiumhydroxid bei pH 7 und 25°C gelöst und mit 18,4 Teilen Cyanurchlorid versetzt. Man rührt noch einige Zeit nach, bis die Umsetzung beendet ist, und gibt sodann 33 Teile N-Phenyl-3-(β-hydroxyethylsulfonyl)propylamin hinzu. Man rührt den Ansatz einige Stunden bei 60°C und einem pH-Wert von 5, bis die Umsetzung beendet ist. Sodann werden 6 Teile Ethanolamin hinzugesetzt, und es wird 1 Stunde bei 90°C und einem anfänglichen pH-Wert von 9, abfallend auf 6,5, umgesetzt. Man isoliert den Farbstoff der Formel 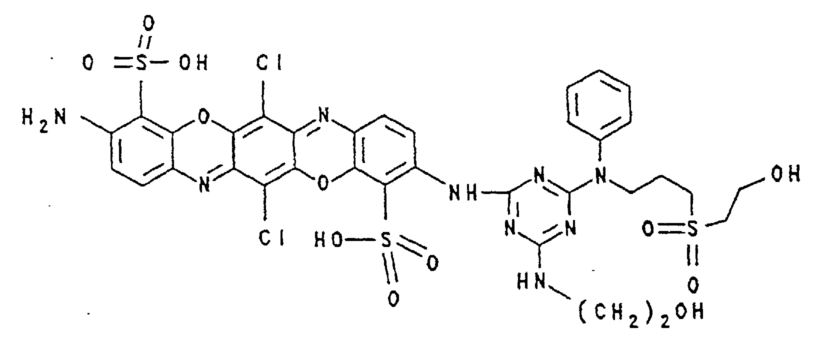 durch Aussalzen oder Sprühtrocknen. Man trägt das trockene Produkt in 300 Teile Schwefelsäure-Monohydrat bei 20 bis 35°C ein, rührt 1 Stunde bei 25°C nach und setzt weitere 10 Teile Oleum 65 % hinzu. Es wird noch einige Zeit bei dieser Temperatur nachgerührt. Sodann wird der Ansatz bei 5 bis 15°C auf Eis ausgetragen, abgesaugt und gut mit Wasser gewaschen. Der Filterkuchen wird in 500 Teile Wasser angerührt, mit zunächst Natronlauge-Lösung bis pH 2 und später Sodalösung auf pH 7 gestellt und in der üblichen Weise isoliert, beispielsweise durch Aussalzen oder Sprühtrocknen.

Man erhält einen Reaktivfarbstoff der Formel 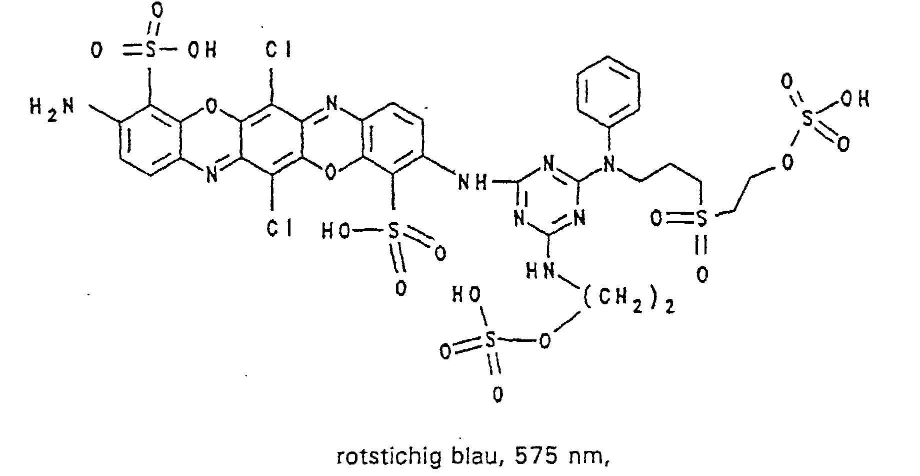 der Cellulosefasern, insbesondere Baumwolle oder Regeneratfasern in farbstarken, brillanten, rotstichig blauen Farbtönen färbt.

### Beispiel 4

83,8 Teile des Natriumsalzes der Verbindung 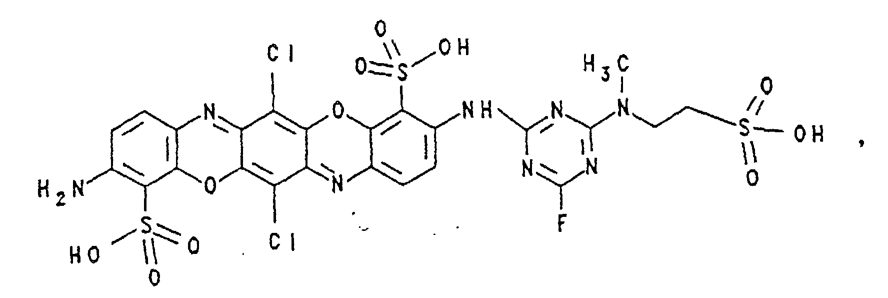 die aus der europäischen Patentschrift Nr. 170838 bekannt ist, werden bei einer Temperatur von 60°C und einem pH-Wert von 6 mit 35 Teilen N-Phenyl-3-(β-sulfatoethyl-sulfonyl)-propyl-amin versetzt. Man erhitzt sodann auf 80 bis 90°C bei einem pH-Wert von 4,5, bis die Umsetzung beendet ist, und erhält den Farbstoff der Formel 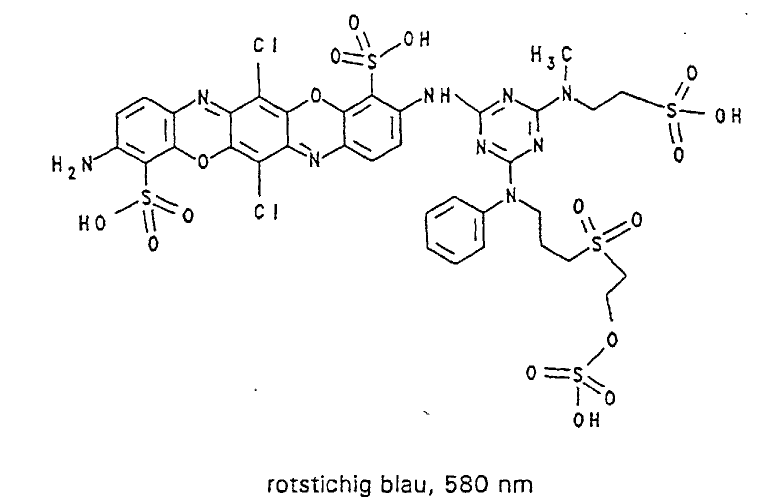 der in der üblichen Weise, beispielsweise durch Aussalzen isoliert wird. Der Farbstoff färbt Cellulosefasern, insbesondere Baumwolle oder Regeneratfasern, in farbstarken, rotstichig blauen Farbtönen.

### Beispiel 5

86 Teile des Natriumsalzes der Verbindung 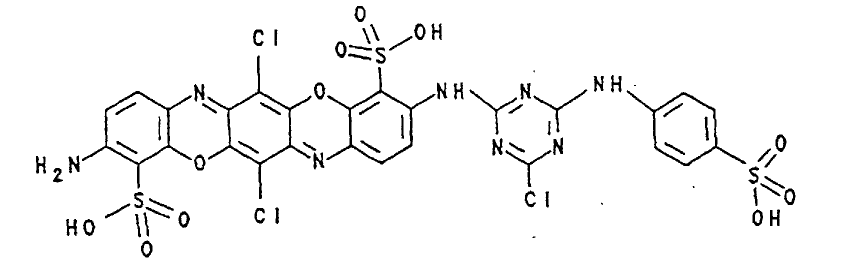 die aus der europäischen Patentschrift Nr. 385120 bekannt ist, werden bei einer Temperatur von 60°C und einem pH-Wert von 6 mit 35 Teilen N-Phenyl-3-(β-sulfatoethyl-sulfonyl)-propyl-amin versetzt. Man erhitzt sodann auf 80 bis 90°C bei einem pH-wert von 4 bis 5 und rührt noch eine Weile nach, bis die Umsetzung beendet'ist. Dabei erhält man einen Farbstoff der Formel 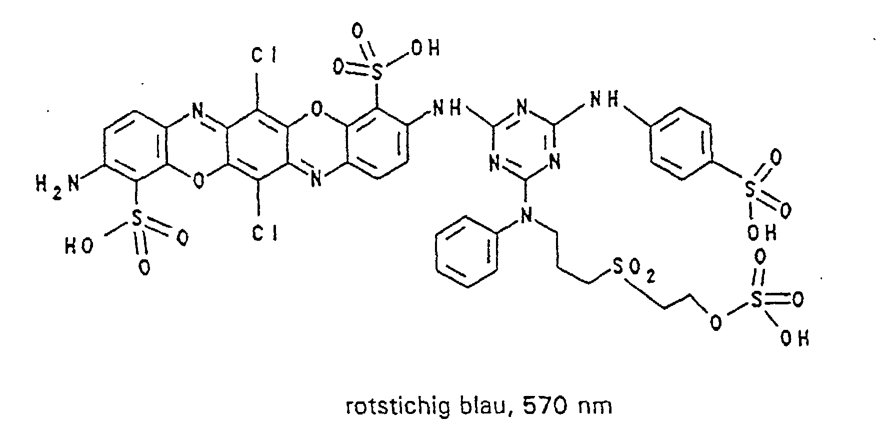 der in der üblichen Weise, beispielsweise durch Aussalzen isoliert wird. Der Farbstoff färbt Cellulosefasern, insbesondere Baumwolle oder Regeneratfasern, in farbstarken, rotstichig blauen Farbtönen.

### Beispiel 6

54,5 Teile der Verbindung 3,10-Diamino-6,13-dichlor-triphendioxazin-4,11-disulfosäure werden in 1000 Teilen Wasser mit 4,8 Teilen Lithiumhydroxid bei pH 7 und 25°C gelöst und mit 18,4 Teilen Cyanurchlorid versetzt. Man rührt noch einige Zeit nach, bis die Umsetzung beendet ist, und gibt sodann 35 Teile N-Phenyl-3-(β-sulfatoethylsulfonyl)propyl-amin hinzu. Man rührt den Ansatz einige Stunden bei 60°C und einem pH-Wert von 5, bis die Umsetzung beendet ist. Sodann werden 10 Teile Morpholin hinzugesetzt, und es wird 1 Stunde bei 80°C und einem pH-Wert von 5 bis 5,5 umgesetzt. Man isoliert den Farbstoff der Formel 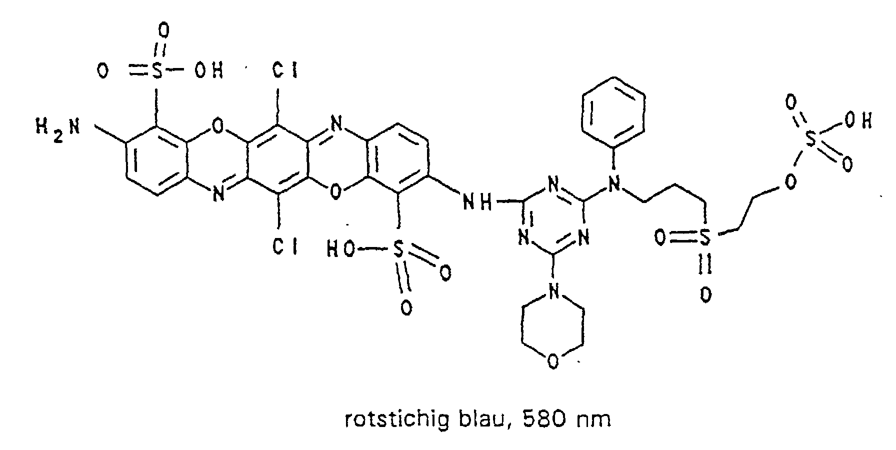 der Cellulosefasern, insbesondere Baumwolle oder Regeneratfasern, in farbstarken, rotstichig blauen Farbtönen färbt.

### Beispiele 7 bis 23

Man erhält weitere wertvolle erfindungsgemäße Farbstoffe der nachfolgenden Strukturformel, wenn man anstelle der in den vorhergehenden Beispielen eingesetzten Amine die in der nachfolgenden Tabelle beschriebenen Amine verwendet.

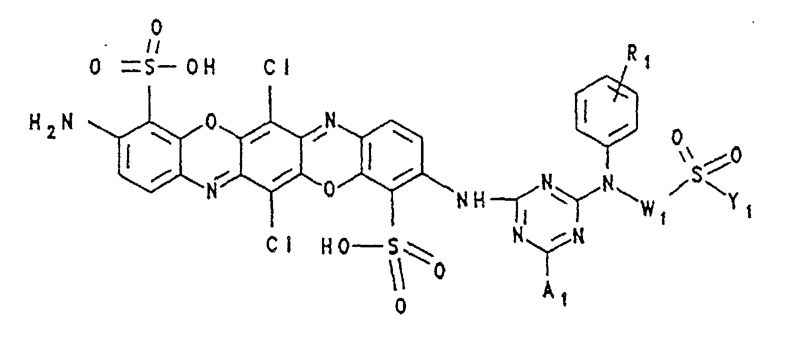

| Bsp. Nr. | A₁ | W₁ | Y₁ | R₁ | Farbton auf Baumwolle |
|---|---|---|---|---|---|
| 7 | Morpholino | 1,2-Ethylen | β-Sulfatoethyl | Wasserstoff | rotstichig blau 580 nm |
| 8 | N-Phenyl-2-(β-sulfatoethylsulfonyl)-ethylamin | dito | dito | dito | rotstichig blau 581 nm |
| 9 | N-(3'-Sulfophenyl)-3-(vinylsulfonyl)propyl-amin | 1,3-Propylen | Vinyl | 3'-Sulfo | rotstichig blau 586 nm |
| 10 | Morpholino | dito | β-Sulfatoethyl | dito | rotstichig blau 580 nm |
| 11 | 3"-Sulfophenyl-amino | dito | dito | dito | rotstichig blau 582 nm |
| 12 | 4"-Sulfophenyl-amino | dito | dito | 4'-Sulfo | rotstichig blau 580 nm |
| 13 | 2",5"-Disulfophenyl-amino | dito | Vinyl | Wasserstoff | rotstichig blau 578 nm |
| 14 | 2"-Carboxyethyl- amino | dito | β-Sulfatoethyl | Wasserstoff | rotstichig blau 577 nm |
| 15 | Carboxymethyl-amino | dito | dito | Wasserstoff | rotstichig blau 582 nm |
| 16 | 2"-Hydroxyethyl-amino | dito | dito | 4'-Sulfo | rotstichig blau 583 nm |
| 17 | 2"-Sulfatoethyl-amino | dito | dito | dito | rotstichig blau 577 nm |
| 18 | Pyrrolidino | dito | β-Chlorethyl | Wasserstoff | rotstichig blau 580 nm |
| 19 | Piperidino | dito | dito | dito | rotstichig blau 580 nm |
| 20 | Hydroxyethyl-piperazinyl | dito | dito | dito | rotstichig blau 580 nm |
| 21 | Sufatoethyl-piperazinyl | dito | β-Sulfatoethyl | dito | rotstichig blau 580 nm |
| 22 | β-Sulfoethyl-amino | dito | Vinyl | dito | rotstichig blau 580 nm |
| 23 | Bis-(β-hydroxyethyl)-amino | dito | dito | 3'-Sulfo | rotstichig blau 580 nm |

### Beispiel 24

32,2 Teile des Farbstoffs der Formel 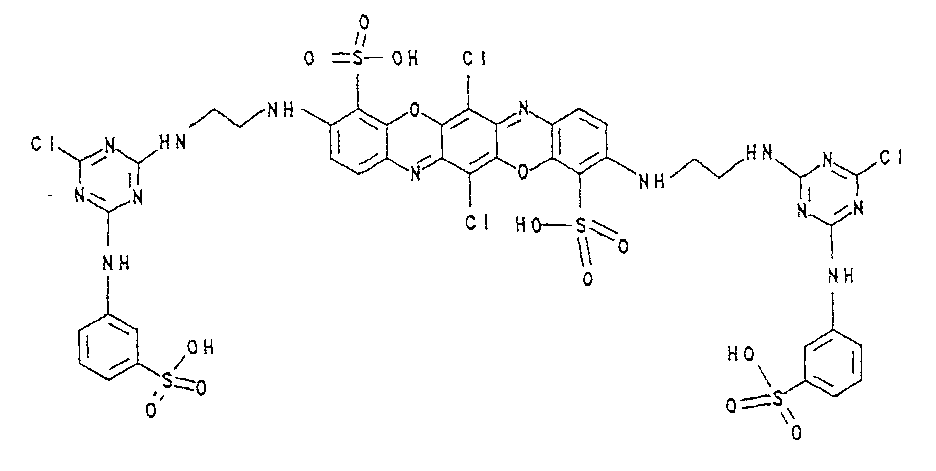 der aus der deutschen Offenlegungsschrift Nr. 2503611 (Bsp. 2) bekannt ist, werden in 1000 Teilen Wasser bei einem pH-Wert von 4 bis 5 mit 60 Teilen N-Phenyl-3-(β-sulfatoethylsulfonyl)-propyl-amin bei einer Temperatur von 85 bis 90°C umgesetzt. Man rührt noch einige Zeit bei diesem pH-Wert und dieser Temperatur nach, bis die Umsetzung beendet ist. Der Farbstoff wird dann in der üblichen Weise isoliert, beispielsweise durch Aussalzen oder Sprühtrocknen. Man erhält einen Reaktivfarbstoff der Formel 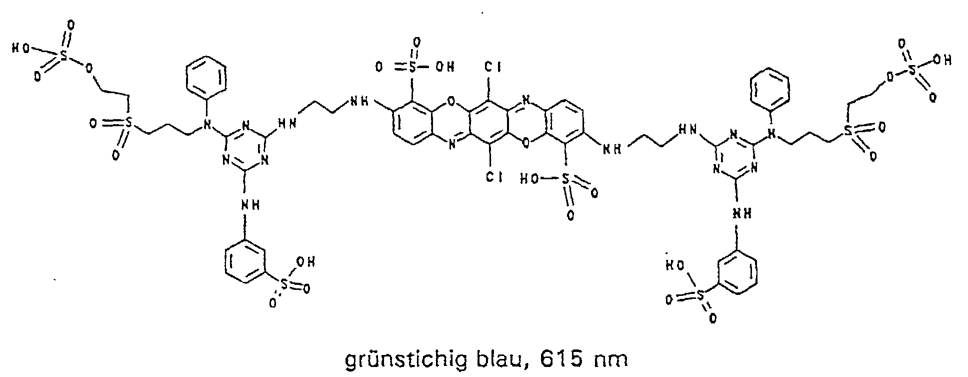 der Cellulosefasern, insbesondere Baumwolle oder Regeneratfasern, in farbstarken, grünstichig blauen Farbtönen färbt.

### Beispiel 25

34 Teile des Farbstoffs der Formel 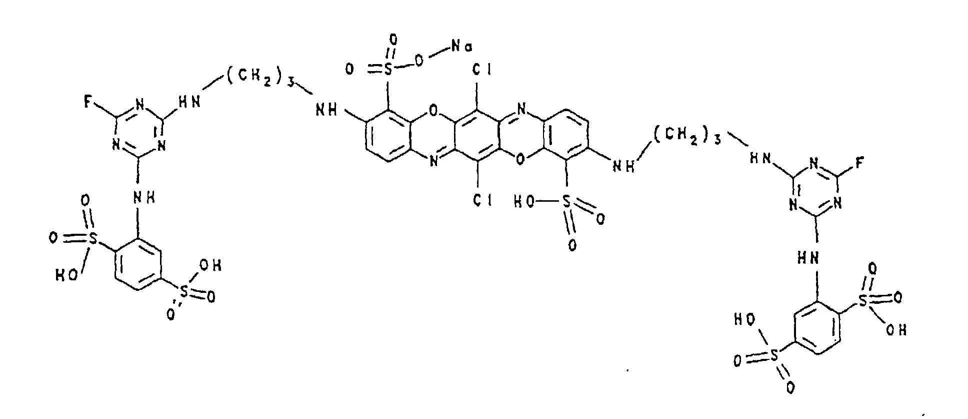 der aus der EP-A-0 101 665 bekannt ist, werden in 1000 Teilen Wasser bei einem pH-Wert von 5 bis 6 mit 60 Teilen N-Phenyl-3-(β-sulfatoethylsulfonyl)-propyl-amin bei einer Temperatur von 60°C umgesetzt. Man rührt noch einige Zeit bei diesem pH-Wert und dieser Temperatur nach, bis die Umsetzung beendet ist. Der Farbstoff wird dann in der üblichen Weise isoliert, beispielsweise durch Aussalzen oder Sprühtrocknen. Man erhält einen Reaktivfarbstoff der Formel 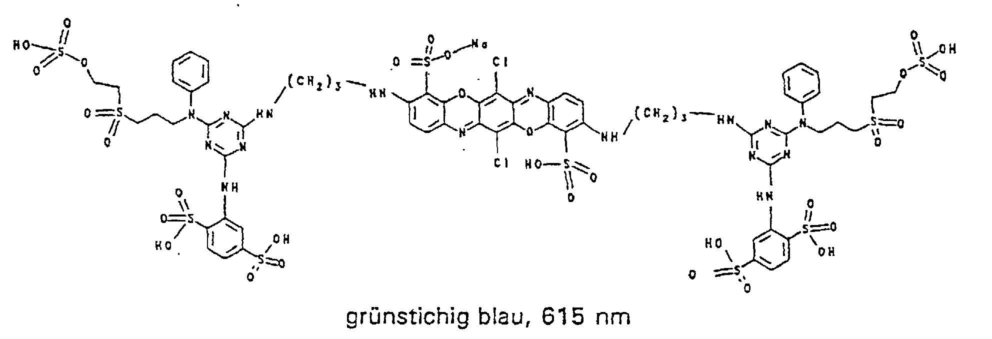 der Cellulosefasern, insbesondere Baumwolle oder Regeneratfasern, in farbstarken, grünstichig blauen Farbtönen färbt.

### Beispiele 26 bis 31

Man erhält weitere wertvolle erfindungsgemäße Farbstoffe der nachfolgenden Strukturformel, wenn man anstelle der in den vorhergehenden Beispielen eingesetzten Amine die in der nachfolgenden Tabelle beschriebenen verwendet.

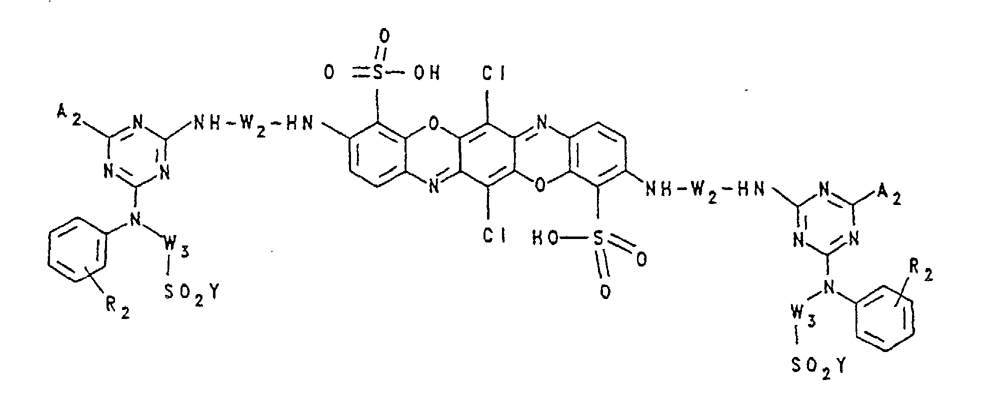

| Bsp. Nr. | A₂ | R₂ | W₂ | W₃ | Y | Farbton auf Baumwolle |
|---|---|---|---|---|---|---|
| 26 | Morpholino | Wasserstoff | 1,2-Ethylen | 1,2-Ethylen | 1-Sulfatoethyl | grünstichig blau 610 nm |
| 27 | 2,5-Disulfophenyl | dito | 1,3-Propylen | dito | Vinyl | grünstichig blau 610 nm |
| 28 | dito | dito | 1,2-Ethylen | dito | Vinyl | grünstichig blau 610 nm |
| 29 | dito | dito | 1,2-Ethylen | 1,3-Propylen | β-Sulfatoethyl | grünstichig blau 610 nm |
| 30 | 4-Methyl-2,5-disulfo-phenyl | dito | 1,2-Ethylen | dito | Vinyl | grünstichig blau 610 nm |
| 31 | 4-Methexy-3-sulfo-phenyl | dito | dito | dito | Vinyl | grünstichig blau 614 nm |

### Beispiel 32

54,5 Teile der Verbindung 3,10-Diamino-6,13-dichlor-triphendioxazin-4,11-disulfosäure werden in 1000 Teilen Wasser mit 4,8 Teilen Lithiumhydroxid bei pH 7 und 25°C gelöst und bei einer Temperatur von 25°C und einem pH-Wert von 7 mit 20 Teilen Cyanurchlorid versetzt. Man rührt noch einige Zeit nach, bis die Umsetzung beendet ist, und gibt sodann 11 Teile Phenol hinzu. Man rührt den Ansatz einige Stunden bei 40°C und einem pH-Wert von 9, bis die Umsetzung beendet ist.
Sodann werden 40 Teile N-Phenyl-3-(β-sulfatoethylsulfonyl)-propylamin hinzugesetzt, und es wird bei 90 bis 95°C und einem pH-Wert von 4 bis 4,5 umgesetzt. Man isoliert den Farbstoff der Formel 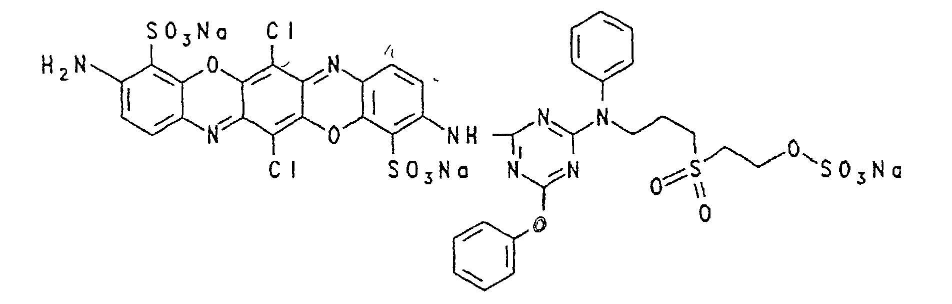 der Cellulosefasern, insbesondere Baumwolle oder Regeneratfasern, in farbstarken, rotstichtig blauen Farbtönen färbt.

## Patentansprüche

1. Triphendioxazinfarbstoff der Formel (1) 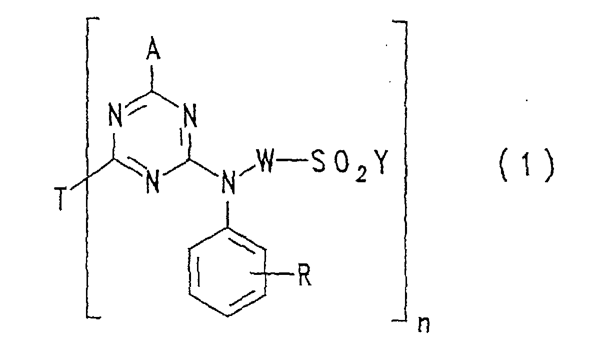 worin bedeuten:
n steht für 1 oder 2;
A steht für eine Gruppe der Formeln (3a), (3b), (3d) oder (3f) bis (3i) 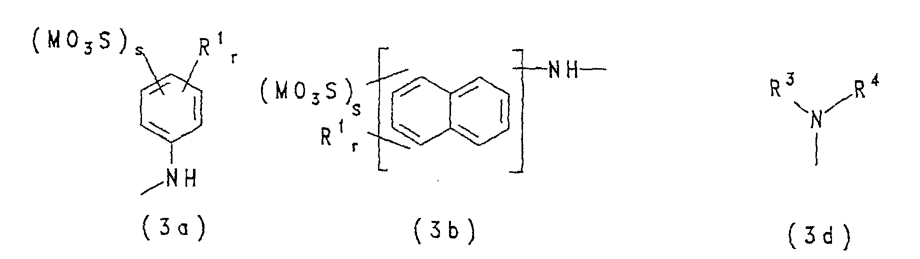 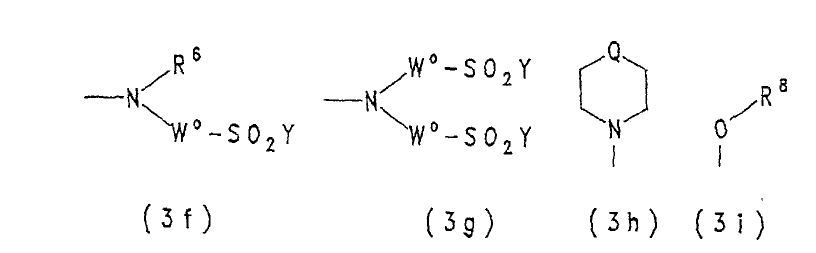 worin bedeuten:
R¹ ist C₁-C₄-Alkyl, C₁-C₄-Alkoxy, Sulfo; -SO₂Y oder Carboxy;
R³ und R⁴ sind unabhängig voneinander Wasserstoff oder C₁-C₆-Alkyl, das mit einem oder mehreren Substituenten aus der Reihe Hydroxy, Sulfo, Sulfato, Amino, C₁-C₄-Alkylamino, Di-(C₁-C₄)-aikylamino, Cyano, C₁-C₄-Alkylcarbonyl, C₁-C₄-Alkoxycarbonyl, Aminocarbonyl oder Carboxy substituiert sein kann, oder
R³ und R⁴ bilden zusammen mit dem N-Atom einen gesättigten fünf-bis siebengliedrigen Heterocyclus, der 1 bis 3 weitere Heteroatome aus der Gruppe N, O und S im Ring enthalten kann;
R⁶ ist Wasserstoff, C₁-C₄-Alkyl oder unsubstituiertes Phenyl oder durch Sulfo, Halogen, C₁-C₄-Alkyl, C₁-C₄-Alkoxy, Carboxy, Cyano oder Nitro substituiertes Phenyl;
R⁸ ist C₁-C₆-Alkyl oder Phenyl, das durch 1 bis 2 gleiche oder verschiedene Substituenten aus der Reihe C₁-C₄-Alkoxy, Sulfo, Amino, Carboxy, Hydroxy, C₁-C₄-Alkyl oder Halogen substituiert sein kann;
W° ist C₂-C₆-Alkylen;
Q ist Sauerstoff, Schwefel, ein Rest -SO₂-, eine direkte Bindung, eine Methylengruppe oder ein Rest -NR⁷-, worin R⁷ eine der Bedeutungen von R³ hat;
r ist 0, 1 oder 2;
s ist 0, 1, 2 oder 3;
R ist Wasserstoff, Sulfo, Halogen, C₁-C₄-Alkyl, C₁-C₄-Alkoxy, Carboxy, Cyano oder Nitro;
W ist C₂-C₆-Alkylen;
Y ist Vinyl oder -(CH₂)₂-V, wobei V für einen unter alkalischen Bedingungen eliminierbaren Substituenten steht;
T ist der Rest eines Triphendioxazin-Chromophors der Formeln (2a) oder (2b) 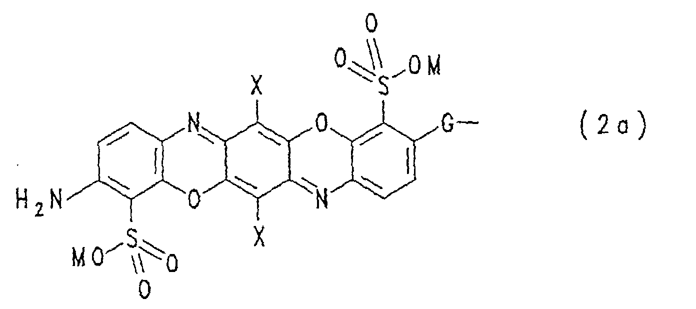 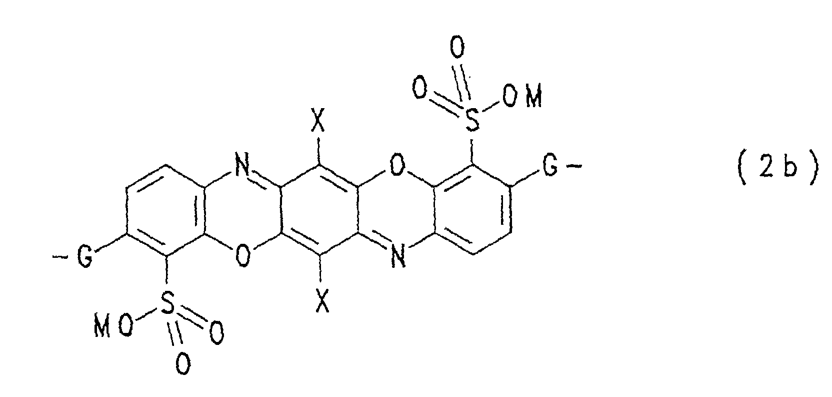 worin
M Wasserstoff, Ammonium oder ein Alkalimetall ist,
X für Halogen, Wasserstoff, C₁-C₄-Alkyl oder C₁-C₄-Alkoxy steht und
G eine -NH-Gruppe oder ein Rest der Formel -NH-B-NH- ist, worin B C₂-C₆-Alkylen bedeutet.

2. Triphendioxazinfarbstoff nach Anspruch 1, worin R³ und R⁴ unabhängig voneinander Wasserstoff oder C₁-C₃-Alkyl, das mit 1 bis 3 Substituenten aus der Reihe Hydroxy, Sulfo, Sulfato, Amino, C₁-C₄-Alkylamino, Di-(C₁-C₄)-alkylamino, Cyano, C₁-C₄-A(kylcarbonyl, C₁-C₄-Alkoxycarbonyl, Aminocarbonyl oder Carboxy substituiert sein kann, oder R³ und R⁴ zusammen mit dem N-Atom einen gesättigten fünf- bis siebengliedrigen Heterocyclus bilden, der 1 bis 3 weitere Heteroatome aus der Gruppe N, O und S im Ring enthalten kann, R⁶ Wasserstoff, C₁-C₄-Alkyl, Phenyl, 3-Sulfophenyl oder 4-Sulfophenyl ist, W° Ethylen oder Propylen ist, Q Sauerstoff, Schwefel, ein Rest -SO₂-, eine direkte Bindung, eine Methylengruppe oder ein Rest -NR⁷- bedeutet, worin R⁷ Hydroxyethyl oder Sulfatoethyl ist, r die Zahl 0 ist und s die Zahl 1 oder 2 ist.

3. Triphendioxazinfarbstoff nach Anspruch 1 oder 2, dadurch gekennzeichnet, daß A für einen Morpholino-, Pyrrolidino-, Piperidino- oder Piperazino-Rest steht, wobei der Piperazino-Rest mit einer Hydroxyethyl-oder Sulfatoethyl-Gruppe substituiert sein kann,oder Methoxy, Ethoxy, 4-Sulfo-phenoxy, 2-Carboxy-phenoxy, 4-Carboxy-phenoxy, Amino, 2,5-Disulfophenyl-amino-, 3-Sulfophenyl-amino, 4-Sulfophenyl-amino, 2-Sulfophenyl-amino-, 4-Methyl-3-sulfophenyl-amino, 4-Methyl-2-sulfophenyl-amino, 4-Methoxy-3-sulfophenyl-amino, 4-Methyl-2,5-disulfophenyl-amino, 4-Methoxy-2,5-disulfophenyl-amino, 4-Ethyl-2,5-disulfophenyl-amino, 4-Ethoxy-2,5-disulfophenyl-amino, 4,8-Disulfonaphth-2-yl-amino, 5,7-Disulfo-naphth-2-yl-amino, 3,6,8-Trisulfo-naphth-2-yl-amino, 4,6,8-Trisulfo-naphth-2-yl-amino, Methylamino, Ethylamino, Dimethylamino, Diethylamino, 3-Hydroxypropylamino, 2-Hydroxyethylamino, N-Ethyl-(2-hydroxyethyl)-amino, 2-Sulfatoethylamino, N-Methyl-2-sulfatoethylamino, Bis-(2-hydroxyethyl)amino, Bis-(2-sulfatoethyl)-amino, 2-Sulfoethylamino, N-Methyl-2-sulfoethylamino, Sulfomethylamino, N-Methyl-sulfomethyl-amino, 2-Carboxyethyl-amino, Carboxymethyl-amino, N-Methyl-2,3,4,5,6-pentahydroxy-hexyl-amino, 2,3,4,5,6-Pentahydroxy-hexyl-amino, Morpholino, Pyrrolidino, Piperidino, Thiomorpholino, Thiomorpholino-dioxid; Piperazino, 2'-Sulfatoethylpiperazino, 2'-Hydroxyethyl-piperazino; N-Phenyl-N-3-(β-sulfatoethylsulfonyl)-propylamino, N-Phenyl-N-3-(ß-chlorethylsulfonyl)-propylamino, N-Phenyl-N-3-(vinylsulfonyl)-propylamino, N-Phenyl-N-2-(β-Sulfatoethylsulfonyl-)ethylamino, N-3'-Sulfophenyl-N-3-(β-sulfatoethylsulfonyl)propylamino, N-3'-Sulfophenyl-N-2-(β-sulfatoethylsulfonyl)-ethylamino, N-3'-Sulfophenyl-N-3-(vinylsulfonyl)-propylamino, N-4'-Sulfophenyl-N-3-(β-sulfatoethylsulfonyl-)propylamino, N-4'-Sulfophenyl-N-2-(β-Sulfatoethylsulfonyl-)ethylamino, N-3-(β-Sulfatoethylsulfonyl-)propylamino, N,N-Bis-(β-Chlorethylsulfonyl-ethyl)-amino, 4-(β-Sulfatoethylsulfonyl)-phenylamino-, 3-(β-Sulfatoethylsulfonyl)-phenylamino, 6-(β-Sulfatoethyl-sulfonyl)-naphth-2-yl-amino, 1-Sulfo-6-(β-Sulfatoethylsulfonyl)-naphth-2-yl-amino, 8-(β-Sulfatoethylsulfonyl)-naphth-2-yl-amino oder 6-Sulfo-8-(β-Sulfatoethylsulfonyl)-naphth-2-yl-amino ist.

4. Triphendioxazinfarbstoff nach mindestens einem der Ansprüche 1 bis 3, dadurch gekennzeichnet, daß R Wasserstoff oder Sulfo ist, W Ethylen oder Propylen ist, Y Vinyl, β-Sulfatoethyl, β-Thiosulfatoethyl, β-Phosphatoethyl oder β-Halogenethyl, vorzugsweise Vinyl, β-Chlorethyl und β-Sulfatoethyl ist, M Wasserstoff, Lithium, Natrium oder Kalium ist, X Chlor, Brom, Wasserstoff, Methyl, Ethyl, Methoxy oder Ethoxy ist und G eine Gruppe der Formeln -NH-, -NH-CH₂CH₂-NH- oder -NH-(CH₂)₃-NH- ist.

5. Verfahren zur Herstellung eines Triphendioxazinfarbstoffs von mindestens einem der Ansprüche 1 bis 4, dadurch gekennzeichnet, daß man eine Verbindung der Formel (4) 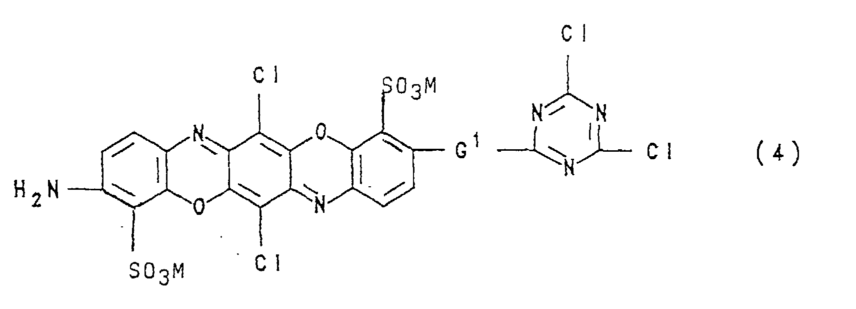 in wäßrigem oder wäßrig-organischem Medium bei einem pH-Wert zwischen 3 und 9, bevorzugt zwischen 4 und 7, und bei einer Temperatur zwischen 25 und 100°C, bevorzugt zwischen 40 und 80°C, mit einer Aminoverbindung der allgemeinen Formel (5) 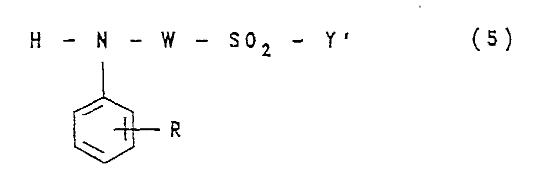 und einer Aminoverbindung der Formel HA, in welchen A, R, M und W die in Anspruch 1 genannten Bedeutungen haben und G¹ -NH- oder -NH-(CH₂)ₓ-NH- mit x gleich der Zahl 2 oder 3 ist und Y' für Hydroxyethyl oder eine der in Anspruch 1 genannten Bedeutungen für Y hat, in beliebiger Reihenfolge umsetzt, und im Falle von Y' gleich Hydroxyethyl die Hydroxyethylgruppe anschließend mit Schwefelsäure, Oleum oder Chlorsulfonsäure zur Sulfatoethylgruppe umsetzt.

6. Verfahren zur Herstellung eines Triphendioxazinfarbstoffs von mindestens einem der Ansprüche 1 bis 4, wobei Y in Formel (1) die Bedeutung Sulfatoethyl hat, dadurch gekennzeichnet, daß man eine Verbindung der Formel (4) 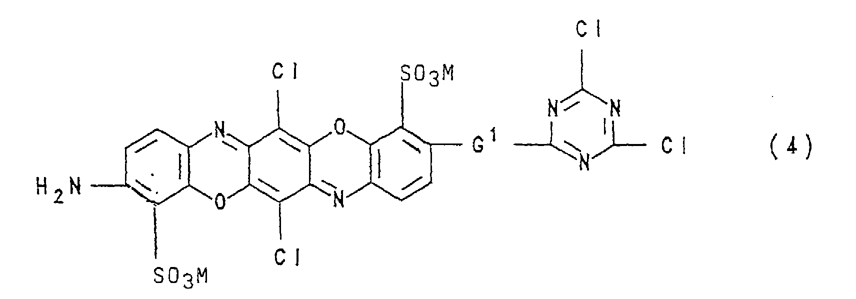 in wäßrigem oder wäßrig-organischem Medium bei einem pH-Wert zwischen 3 und 9, bevorzugt zwischen 4 und 7, und bei einer Temperatur zwischen 25 und 100°C, bevorzugt zwischen 40 und 80°C, mit einer Aminoverbindung der allgemeinen Formel (5) 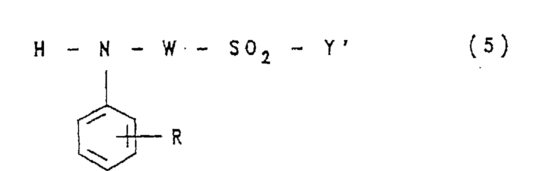 und einer Aminoverbindung der Formel HA in beliebiger Reihenfolge umsetzt, wobei in diesen Formeln Y' die Hydroxyethylgruppe bedeutet, A, R, M und W die in Anspruch 1 genannten Bedeutungen haben, G¹ -NH- oder -NH-(CH₂)ₓ-NH- mit x gleich der Zahl 2 oder 3 ist, und anschließend in einem separaten Reaktionsschritt die Hydroxyethylgruppe mit Schwefelsäure, Oleum oder Chlorsulfonsäure zu einer Sulfatoethylsulfongruppe umsetzt.

7. Verwendung eines Triphendioxazinfarbstoffs von mindestens einem der Ansprüche 1 bis 4 zum Färben von hydroxy-, amino- und/oder carbonamidgruppenhaltigem Material, insbesondere Fasermaterial.

8. Verfahren zum Färben von hydroxy-, amino- und/oder carbonamidgruppenhaltigem Material, vorzugsweise Fasermaterial, bei welchem man einen Farbstoff oder eine Farbstoffmischung in wäßrigem Medium mit dem Material in Kontakt bringt und die Fixierung des oder der Farbstoffe auf dem Material mittels Wärme oder mit Hilfe eines alkalisch wirkenden Mittels oder mit Hilfe beider Maßnahmen durchführt, dadurch gekennzeichnet, daß der Farbstoff ein Triphendioxazinfarbstoff der allgemeinen Formel (1) von mindestens einem der Ansprüche 1 bis 4 ist.

9. Verfahren nach Anspruch 8, dadurch gekennzeichnet, daß das Verfahren zum Färben ein Auszieh-Färbeverfahren ist und die Färbeflotte einen Elektrolytsalzgehalt von insgesamt weniger als 50 g/l Färbeflotte enthält.

## Claims

1. A triphendioxazine dyestuff of the formula (1) 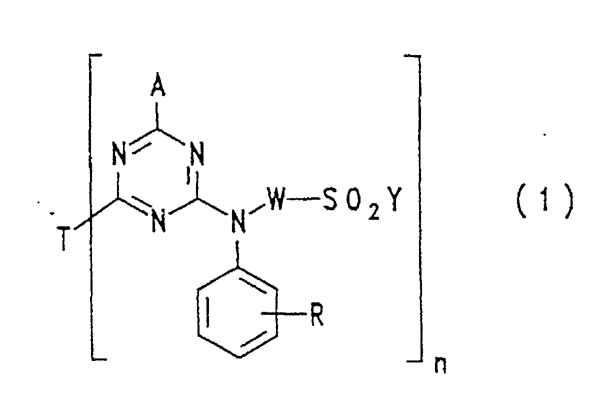 in which:
n is 1 or 2;
A is a group of the formulae (3a), (3b), (3d) or (3f) to (3i) 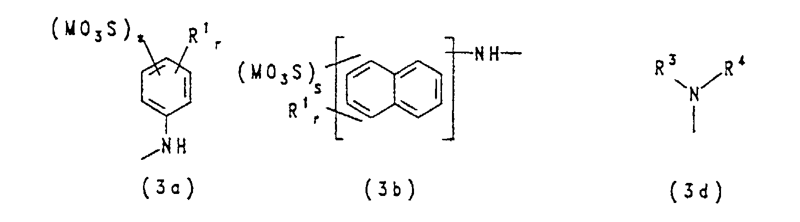 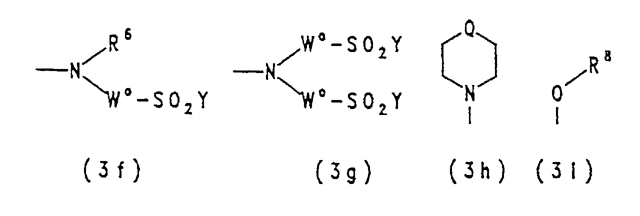
in which
R¹ is C₁-C₄-alkyl, C₁-C₄-alkoxy, sulfo, -SO₂Y or carboxyl;
R³ and R⁴ independently of one another are hydrogen or C₁-C₆-alkyl, which can be substituted by one or more substituents from the group consisting of hydroxyl, sulfo, sulfato, amino, C₁-C₄-alkyl-amino, di-(C₁-C₄)-alkylamino, cyano, C₁-C₄-alkyl-carbonyl, C₁-C₄-alkoxycarbonyl, aminocarbonyl or carboxyl, or
R³ and R⁴ together with the N atom form a saturated five- to seven-membered heterocyclic radical which can contain 1 to 3 further hetero atoms from the group consisting of N, O and S in the ring;
R⁶ is hydrogen, C₁-C₄-alkyl or unsubstituted phenyl or phenyl which is substituted by sulfo, halogen, C₁-C₄-alkyl, C₁-C₄-alkoxy, carboxyl, cyano or nitro;
R⁸ is C₁-C₆-alkyl or phenyl, which can be substituted by 1 or 2 identical or different substituents from the group consisting of C₁-C₄-alkoxy, sulfo, amino, carboxyl, hydroxyl, C₁-C₄-alkyl or halogen;
W° is C₂-C₆-alkylene;
Q is oxygen, sulfur, a radical -SO₂-, a direct bond, a methylene group or a radical -NR⁷-, in which R⁷ has one of the meanings of R³;
r is 0, 1 or 2;
s is 0, 1, 2 or 3;
R is hydrogen, sulfo, halogen, C₁-C₄-alkyl, C₁-C₄-alkoxy, carboxyl, cyano or nitro;
W is C₂-C₆-alkylene;
Y is vinyl or -(CH₂)₂-V, in which V is a substituent which can be eliminated under alkaline conditions;
T is the radical of a triphendioxazine chromophore of the formula (2a) or (2b) 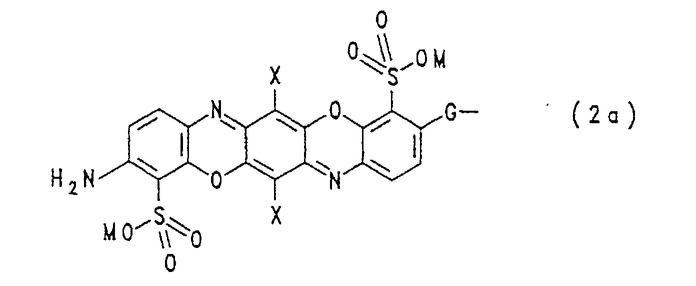 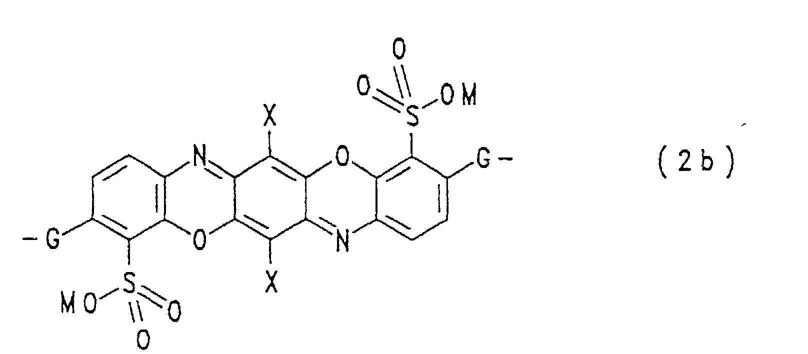 in which
M is hydrogen, ammonium or an alkali metal,
X is halogen, hydrogen, C₁-C₄-alkyl or C₁-C₄-alkoxy and
G is an -NH- group or a radical of the formula -NH-B-NH-, in which B is C₂-C₆-alkylene.

2. A triphendioxazine dyestuff as claimed in claim 1, in which R³ and R⁴ independently of one another are hydrogen or C₁-C₃-alkyl, which can be substituted by 1 to 3 substituents from the group consisting of hydroxyl, sulfo, sulfato, amino, C₁-C₄-alkylamino, di-(C₁-C₄) -alkylamino, cyano, C₁-C₄-alkylcarbonyl, C₁-C₄-alkoxycarbonyl, aminocarbonyl and carboxyl, or R³ and R⁴ together with the N atom form a saturated five- to seven-membered heterocyclic radical which can contain 1 to 3 further hetero atoms from the group consisting of N, O and S in the ring, R⁶ is hydrogen, C₁-C₄-alkyl, phenyl, 3-sulfophenyl or 4-sulfophenyl, W⁰ is ethylene or propylene, Q is oxygen, sulfur, a radical -SO₂-, a direct bond, a methylene group or a radical -NR⁷-, in which R⁷ is hydroxyethyl or sulfatoethyl, r is the number 0 and s is the number 1 or 2.

3. A triphendioxazine dyestuff as claimed in claim 1 or 2, in which A is a morpholino, pyrrolidino, piperidino or piperazino radical, where the piperazino radical can be substituted by a hydroxyethyl or sulfatoethyl group, or methoxy, ethoxy, 4-sulfo-phenoxy, 2-carboxy-phenoxy, 4-carboxy-phenoxy, amino, 2,5-disulfophenyl-amino, 3-sulfophenyl-amino, 4-sulfophenyl-amino, 2-sulfophenyl-amino, 4-methyl-3-sulfophenyl-amino, 4-methyl-2-sulfophenyl-amino, 4-methoxy-3-sulfophenyl-amino, 4-methyl-2,5-disulfophenyl-amino, 4-methoxy-2,5-disulfophenyl-amino, 4-ethyl-2,5-disulfo-phenyl-amino, 4-ethoxy-2,5-disulfophenyl-amino, 4,8-disulfo-naphth-2-yl-amino, 5,7-disulfo-naphth-2-yl-amino, 3,6,8-trisulfo-naphth-2-yl-amino, 4,6,8-trisulfo-naphth-2-yl-amino, methylamino, ethylamino, dimethylamino, diethylamino, 3-hydroxypropylamino, 2-hydroxyethylamino, N-ethyl-(2 -hydroxyethyl)-amino, 2-sulfatoethyl-amino, N-methyl-2-sulfatoethylamino, bis- (2-hydroxyethyl)-amino, bis-(2-sulfatoethyl)-amino, 2-sulfo-ethylamino, N-methyl-2-sulfoethylamino, sulfo-methylamino, N-methyl-sulfomethyl-amino, 2-carboxyethyl-amino, carboxymethyl-amino, N-methyl-2,3,4,5,6-pentahydroxy-hexyl-amino, 2,3,4,5,6-pentahydroxy-hexyl-amino, morpholino, pyrrolidino, piperidino, thiomorpholino, thiomorpholino-dioxide, piperazino, 2'-sulfatoethyl-piperazino, 2'-hydroxy-ethyl-piperazino, N-phenyl-N-3-(β-sulfatoethyl-sulfonyl) -propylamino, N-phenyl-N-3-(β-chloroethyl-sulfonyl)-propylamino, N-phenyl-N-3-(vinyl-sulfonyl)-propylamino, N-phenyl-N-2-β-sulfato-ethylsulfonyl)-ethylamino, N-3'-sulfophenyl-N-3-(β-sulfatoethylsulfonyl)propylamino, N-3'-sulfophenyl-N-2-(β-sulfatoethylsulfonyl)-ethylamino, N-3'-sulfophenyl-N-3-(vinylsulfonyl)-propylamino, N-4'-sulfophenyl-N-3-(β-sulfatoethylsulfonyl) -propyl-amino, N-4'-sulfophenyl-N-2-(β-sulfatoethyl-sulfonyl)-ethylamino, N-3-(β-sulfatoethylsulfonyl)-propylamino, N,N-bis-(β-chloroethylsulfonyl-ethyl)-amino, 4-(β-sulfatoethylsulfonyl)-phenylamino, 3-(β-sulfatoethylsulfonyl)-phenylamino, 6-(β-sulfato-ethylsulfonyl)-naphth-2-yl-amino, 1-sulfo-6-(β-sulfatoethylsulfonyl)-naphth-2-yl-amino, 8-(β-sulfatoethylsulfonyl)-naphth-2-yl-amino or 6-sulfo-8-(β-sulfatoethylsulfonyl)-naphth-2-yl-amino.

4. A triphendioxazine dyestuff as claimed in at least one of claims 1 to 3, in which R is hydrogen or sulfo, W is ethylene or propylene, Y is vinyl, β-sulfatoethyl, β-thiosulfatoethyl, β-phosphatoethyl or β-halogenoethyl, preferably vinyl, β-chloroethyl or β-sulfatoethyl, M is hydrogen, lithium, sodium or potassium, X is chlorine, bromine, hydrogen, methyl, ethyl, methoxy or ethoxy and G is a group of the formula -NH-, -NH-CH₂CH₂-NH- or -NH- (CH₂)₃-NH-.

5. A process for the preparation of a triphendioxazine dyestuff of at least one of claims 1 to 4, which comprises reacting a compound of the formula (4) 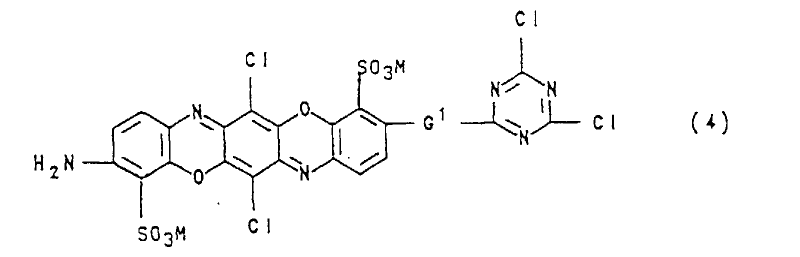 in an aqueous or aqueous-organic medium at a pH of between 3 and 9, preferably between 4 and 7, and at a temperature between 25 and 100°C, preferably between 40 and 80°C, with an amino compound of the formula (5) 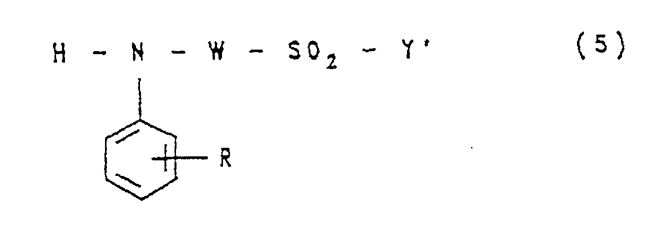 and an amino compound of the formula HA, in which compounds A, R, M and W have the meanings given in claim 1 and G¹ is -NH- or -NH-(CH₂)ₓ-NH- where x is equal to the number 2 or 3 and Y' is hydroxyethyl or has one of the meanings given for Y in claim 1, in any desired sequence, and, if Y' is equal to hydroxyethyl, then reacting the hydroxyethyl group with sulfuric acid, oleum or chlorosulfonic acid to give the sulfatoethyl group.

6. A process for the preparation of a triphendioxazine dyestuff of at least one of claims 1 to 4, in which Y in formula (1) is sulfatoethyl, which comprises reacting a compound of the formula (4) 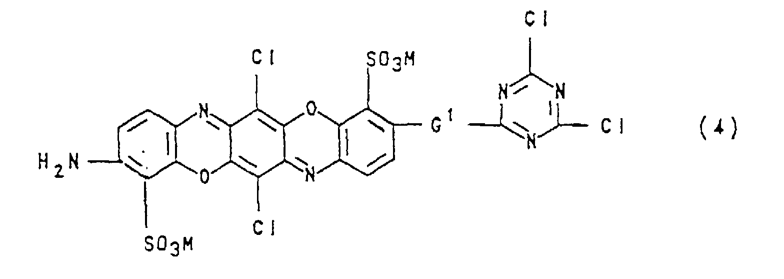 in an aqueous or aqueous-organic medium at a pH of between 3 and 9, preferably between 4 and 7, and at a temperature between 25 and 100°C, preferably between 40 and 80°C, with an amino compound of the formula (5) 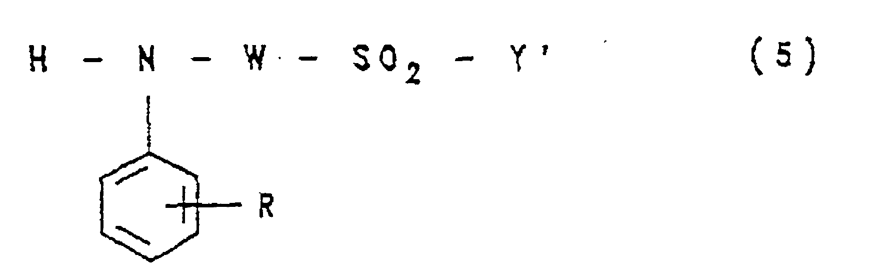 and an amino compound of the formula HA in any desired sequence, in which in these formulae Y' is the hydroxyethyl group, A, R, M and W have the meanings given in claim 1 and G¹ is -NH- or -NH-(CH₂)ₓ-NH- where x is equal to the number 2 or 3, and then reacting the hydroxyethyl group with sulfuric acid, oleum or chlorosulfonic acid in a separate reaction step to give a sulfatoethylsulfone group.

7. The use of a triphendioxazine dyestuff of at least one of claims 1 to 4 for dyeing material containing hydroxyl, amino and/or carboxamide groups, in particular fiber material.

8. A process for dyeing material containing hydroxyl, amino and/or carboxamide groups, preferably fiber material, in which a dyestuff or a dyestuff mixture is brought into contact with the material in an aqueous medium and fixing of the dyestuff or dyestuffs on the material is carried out by means of heat or with the aid of an alkaline agent or with the aid of both measures, which comprises using a triphendioxazine dyestuff of the formula (1) of at least one of claims 1 to 4 as the dyestuff.

9. The process as claimed in claim 8, wherein the process for dyeing is an exhaust dyeing process and the dye liquor comprises an electrolyte salt content of less than 50 g/l of dye liquor in total.

## Revendications

1. Colorant triphéndioxazinique de formule (1) 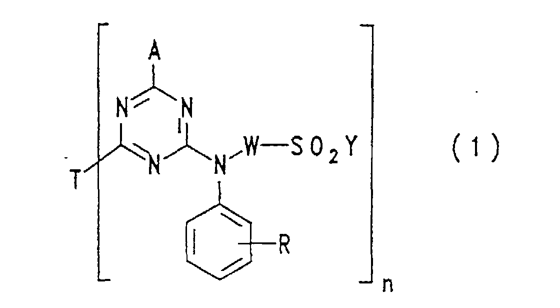 dans laquelle
n signifie 1 ou 2,
A signifie un groupement de formules (3a),
(3b), (3d) ou (3f) à (3i) 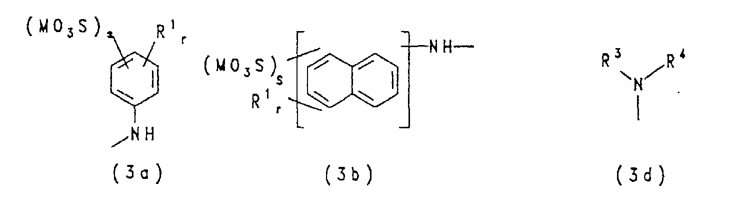 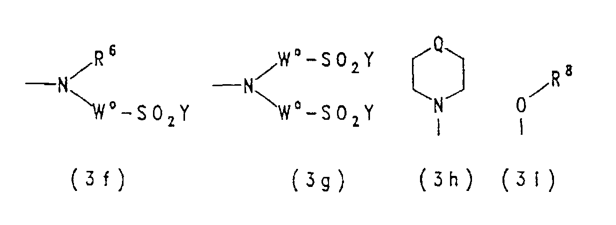 dans lesquelles
R¹ représente un alkyle en C₁-C₄, un alkoxy en C₁-C₄, un sulfo, un -SO₂Y ou un carboxy,
R³ et R⁴ représentent, indépendamment l'un de l'autre, un hydrogène ou un alkyle en C₁-C₆, qui peut être substitué par un ou plusieurs substituants parmi la série hydroxy, sulfo, sulfato, amino, alkylamino en C₁-C₄, di (alkyle en C₁-C₄) amino, cyano, (alkyle en C₁-C₄) carbonyle, (alkoxy en C₁-C₄)-carbonyle, aminocarbonyle ou carboxy, ou
R³ et R⁴ forment ensemble avec l'atome N un hétérocycle saturé de cinq à sept membres, qui peut contenir 1 à 3 autres hétéroatomes parmi le groupe N, O et S dans le cycle ;
R⁶ représente un hydrogène, un alkyle en C₁-C₄ ou un phényle non substitué ou un phényle substitué par sulfo, halogène, alkyle en C₁-C₄, alkoxy en C₁-C₄, carboxy, cyano ou nitro ;
R⁸ représente un alkyle en C₁-C₆ ou phényle qui peut être substitué par 1 ou 2 substituants identiques ou différents parmi la série alkoxy en C₁-C₄, sulfo, amino, carboxy, hydroxy, alkyle en C₁-C₄ ou halogène;
W° représente un alkylène en C₂-C₆ ;
Q représente un oxygène, un soufre, un radical -SO₂-, une liaison directe, un groupement méthylène ou un radical -NR⁷-, où R⁷ a une des significations de R³ ;
r représente 0, 1 ou 2 ;
s représente 0, 1, 2 ou 3 ;
R représente un hydrogène, un sulfo, un halogène, un alkyle en C₁-C₄, un alkoxy en C₁-C₄, un carboxy, un cyano ou un nitro ;
W représente un alkylène en C₂-C₆;
Y représente un vinyle ou un - (CH₂)₂-V, V représentant un substituant pouvant être éliminé dans des conditions alcalines ;
T représente le radical d'un chromophore de triphéndioxazine de formule (2a) ou (2b) 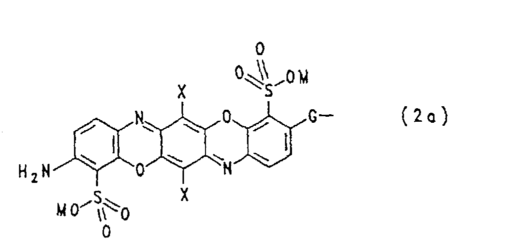 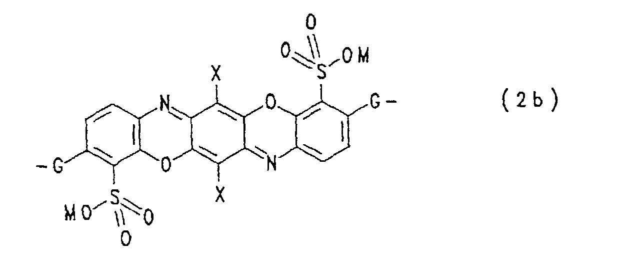 dans lesquelles
M représente un hydrogène, un ammonium ou un métal alcalin,
X représente un halogène, un hydrogène, un alkyle en C₁-C₄ ou un alkoxy en C₁-C₄ et
G signifie un groupement -NH- ou un radical de formule -NH-B-NH-, dans laquelle B signifie un alkylène en C₂-C₆.

2. Colorant triphéndioxazinique selon la revendication 1, dans lequel R³ et R⁴ représentent indépendamment l'un de l'autre un hydrogène ou un alkyle en C₁-C₃, qui peut être substitué par 1 à 3 substituants parmi la série hydroxy, sulfo, sulfato, amino, alkylamino en C₁-C₄, di(alkyle en C₁-C₄) amino, cyano, (alkyle en C₁-C₄) carbonyle, (alkoxy en C₁-C₄) carbonyle, aminocarbonyle ou carboxy ou R³ et R⁴ forment ensemble avec l'atome N un hétérocycle saturé de cinq à sept membres, qui peut contenir 1 à 3 autres hétéroatomes parmi le groupe N, O et S dans le cycle, R⁶ représente un hydrogène, un alkyle en C₁-C₄, phényle, 3-sulfophényle ou 4-sulfophényle, W° représente un éthylène ou un propylène, Q représente un oxygène, un soufre, un radical -SO₂-, une liaison directe, un groupement méthylène ou un radical -NR⁷-, où R⁷ représente un hydroxyéthyle ou sulfatoéthyle, r représente le nombre 0 et s le nombre 1 ou 2.

3. Colorant triphéndioxazinique selon la revendication 1 ou 2, caractérisé en ce que A représente un radical morpholino, pyrrolidino, pipéridino ou pipérazino, le radical pipérazino pouvant être substitué par un groupement hydroxyéthyle ou sulfatoéthyle, ou un méthoxy, éthoxy, 4-sulfophénoxy, 2-carboxy-phénoxy, 4-carboxy-phénoxy, amino, 2,5-disulfophénylamino, 3-sulfophénylamino, 4-sulfophénylamino, 2-sulfophénylamino, 4-méthyl-3-sulfophénylamino, 4-méthyl-2-sulfophénylamino, 4-méthoxy-3-sulfophénylamino, 4-méthyl-2,5-disulfophénylamino, 4-méthoxy-2,5-disulfophénylamino, 4-éthyl-2,5-disulfophénylamino, 4-éthoxy-2,5-disulfophénylamino, 4,8-disulfonapht-2-yl-amino, 5,7-disulfonapht-2-ylamino, 3,6,8-trisulfo-napht-2-ylamino, 4,6,8-trisulfonapht-2-ylamino, méthylamino, éthylamino, diméthylamino, diéthylamino, 3-hydroxypropylamino, 2-hydroxyéthylamino, N-éthyl(2-hydroxyéthyl)amino, 2-sulfatoéthylamino, N-méthyl-2-sulfatoéthylamino, bis(2-hydroxyéthyl)amino, bis(2-sulfatoéthyl) amino, 2-sulfoéthylamino, N-méthyl-2-sulfoéthylamino, sulfométhylamino, N-méthylsulfométhylamino, 2-carboxyéthylamino, carboxyméthylamino, N-méthyl-2,3,4,5,6-pentahydroxyhexylamino, 2,3,4,5,6-pentahydroxyhexylamino, morpholino, pyrrolidino, pipéridino, thiomorpholino, thiomorpholinodioxyde, pipérazino, 2'-sulfatoéthylpipérazino, 2'-hydroxyéthylpipérazino, N-phényl-N-3-(β-sulfatoéthylsulfonyl)-propylamino, N-phényl-N-3-(β-chloroéthylsulfonyl)-propylamino, N-phényl-N-3-(vinylsulfonyl)propylamino, N-phényl-N-2-(β-sulfatoéthylsulfonyl)éthylamino, N-3'-sulfophényl-N-3-(β-sulfatoéthylsulfonyl)propylamino, N-3'-sulfophényl-N-2-(β-sulfatoéthylsulfonyl) éthylamino, N-3'-sulfophényl-N-3-(vinylsulfonyl)propylamino, N-4'-sulfophényl-N-3-(β-sulfatoéthylsulfonyl)propylamino, N-4'-sulfophényl-N-2-(β-sulfatoéthylsulfonyl) éthylamino, N-3-(β-sulfatoéthylsulfonyl)propylamino, N,N-bis (β-chloroéthylsulfonyléthyl)amino, 4-(β-sulfatoéthylsulfonyl) phénylamino, 3-(β-sulfatoéthylsulfonyl)phénylamino, 6-(β-sulfatoéthylsulfonyl)-napht-2ylamino, 1-sulfo-6-(β-sulfatoéthylsulfonyl)-napht-2-ylamino, 8-(β-sulfatoéthylsulfonyl)napht-2-ylamino ou 6-sulfo-8-(β-sulfatoéthylsulfonyl)napht-2-ylamino.

4. Colorant triphéndioxazinique selon au moins l'une quelconque des revendications 1 à 3, caractérisé en ce que R représente un hydrogène ou un sulfo, W un éthylène ou un propylène, Y un vinyle, β-sulfatoéthyle, β-thiosulfatoethyle, β-phosphatoéthyle ou β-halogénoéthyle, de préférence un vinyle, β-chloroéthyle et β-sulfatoéthyle, M représente un hydrogène, un lithium, un sodium ou un potassium, X représente un chlore, un brome, un hydrogène, un groupement méthyle, un éthyle, un méthoxy ou un éthoxy et G un groupement de formules -NH-, -NH-CH₂CH₂-NH- ou -NH- (CH₂)₃-NH- .

5. Procédé pour la fabrication d'un colorant de triphéndioxazine selon au moins l'une quelconque des revendications 1 à 4, caractérisé en ce qu'on transforme dans un ordre quelconque un composé de formule (4) 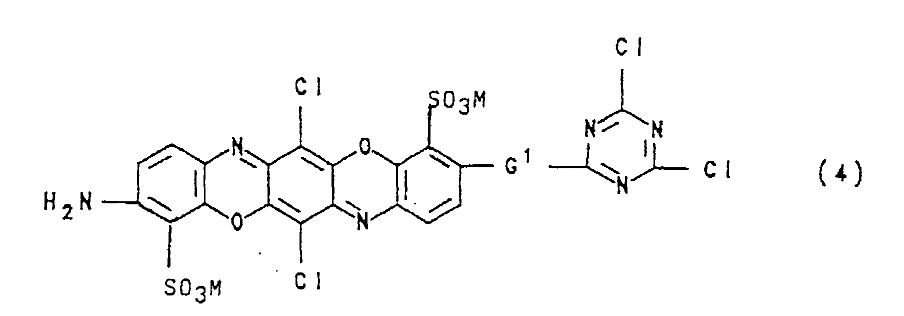 en milieu aqueux ou organo-aqueux à un pH entre 3 et 9, de préférence entre 4 et 7, et à une température entre 25 et 100°C, de préférence entre 40 et 80°C, avec un composé aminé de formule générale (5) 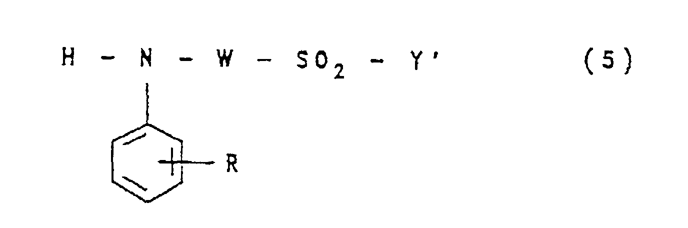 et un composé aminé de formule HA, dans lesquelles A, R, M et W ont les significations mentionnées dans la revendication 1 et G¹ représente un groupement -NH- ou -NH-(CH₂)ₓ-NH-, avec x égal au nombre 2 ou 3, et Y' représente un hydroxyéthyle ou une des significations mentionnées dans la revendication 1 pour Y, et, dans le cas où Y' représenterait un hydroxyéthyle, en ce qu'on transforme le groupement hydroxyéthyle consécutivement avec de l'acide sulfurique, de l'oléum ou de l'acide chlorosulfonique en un groupement sulfatoéthyle.

6. Procédé pour la fabrication d'un colorant triphéndioxazinique selon au moins l'une quelconque des revendications 1 à 4, Y dans la formule (1) signifiant un sulfatoéthyle, caractérisé en ce qu'on transforme dans un ordre quelconque un composé de formule (4) 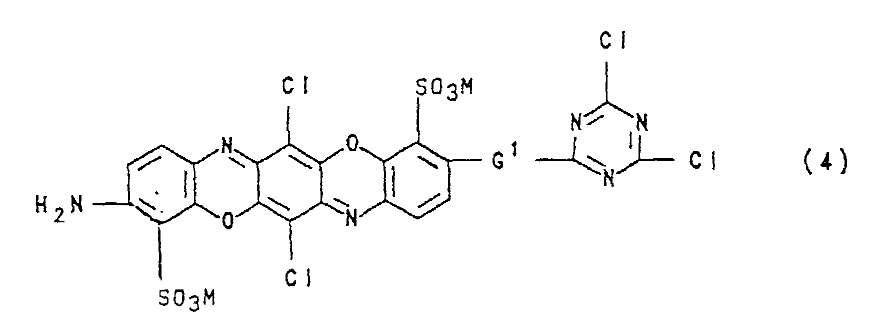 en milieu aqueux ou organo-aqueux à un pH entre 3 et 9, de préférence entre 4 et 7, et à une température entre 25 et 100°C, de préférence entre 40 et 80°C, avec un composé aminé de formule générale (5) 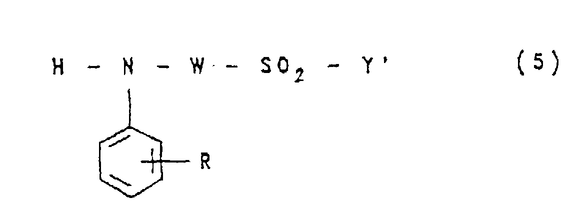 et un composé aminé de formule HA, Y' dans ces formules signifiant le groupement hydroxyéthyle, A, R, M et W ayant les significations mentionnées dans la revendication 1, G¹ représentant un groupement -NH- ou-NH-(CH₂)ₓ-NH-, avec x égal au nombre 2 ou 3, et en ce qu'on transforme consécutivement dans une étape de réaction séparée le groupement hydroxyéthyle avec de l'acide sulfurique, de l'oléum ou de l'acide chlorosulfonique en un groupement sulfatoéthyle sulfone.

7. Utilisation d'un colorant triphéndioxazinique selon au moins l'une quelconque des revendications 1 à 4 pour la teinture d'un matériau contenant des groupements hydroxy, amino et/ou carbonamide, en particulier un matériau fibreux.

8. Procédé pour la teinture d'un matériau contenant des groupements hydroxy, amino et/ou carbonamide, de préférence un matériau fibreux, dans lequel on met en contact un colorant ou un mélange de colorants en milieu aqueux avec le matériau et on réalise la fixation du ou des colorants sur le matériau à l'aide de chaleur ou à l'aide d'un agent à effet alcalin ou à l'aide des deux mesures, caractérisé en ce que le colorant est un colorant triphéndioxazinique de formule générale (1) d'au moins l'une quelconque des revendications 1 à 4.

9. Procédé selon la revendication 8, caractérisé en ce que le procédé pour la teinture est un procédé de teinture par extraction et en ce que le bain de teinture contient une teneur en sel électrolytique au total inférieure à 50 g/l de bain de teinture.
